# EUROPÄISCHE PATENTSCHRIFT

(11) **EP 3 452 529 B1**
(45) Veröffentlichungstag und Bekanntmachung des Hinweises auf die Patenterteilung: **16.08.2023**
(21) Anmeldenummer: 17720515.0
(22) Anmeldetag: 03.05.2017
(51) Int. Cl.: C08G 18/79, C08G 18/22

(54) **VERFAHREN ZUR HERSTELLUNG EINES POLYISOCYANURAT-KOMPOSITWERKSTOFFS**
METHOD FOR PRODUCING A POLYISOCYANURATE COMPOSITE MATERIAL
PROCÉDÉ DE FABRICATION D'UN MATÉRIAU COMPOSITE À BASE DE POLYISOCYANURATE

(30) Priorität: 04.05.2016 EP 16168336
(43) Veröffentlichungstag der Anmeldung: 13.03.2019
(73) Patentinhaber: Covestro Intellectual Property GmbH & Co. KG, 51373 Leverkusen (DE)
(72) Erfinder: HOCKE, Heiko, Pu Dong New District Shanghai 200122 (CN); MATNER, Mathias, 41464 Neuss (DE); ACHTEN, Dirk, 51375 Leverkusen (DE); HEINZ, Paul, 51375 Leverkusen (DE)
(74) Vertreter: Levpat
(86) Internationale Anmeldenummer: PCT/EP2017/060506
(87) Internationale Veröffentlichungsnummer: WO 2017/191175

(56) Entgegenhaltungen:
- US-A1- 2005 163 969
- US-A1- 2009 005 517

## Beschreibung

Die vorliegende Erfindung betrifft ein Verfahren zur Herstellung von Polyisocyanurat-Kompositwerkstoffen, die daraus erhältlichen Polyisocyanurat-Kompositwerkstoffe sowie die Verwendung derartiger Polyisocyanurat-Kompositwerkstoffe zur Herstellung von Bauteilen sowie Bauteile, bestehend aus oder enthaltend einen erfindungsgemäßen Polyisocyanurat-Kompositwerkstoff.

Faserverstärkte Kompositwerkstoffe, die aus einer polymeren Matrix und einem faserförmigen Füllstoff bestehen, finden überwiegend als Leichtbaumaterialien, beispielsweise im Fahrzeugbau, Schiffbau, Flugzeugbau, Sportbereich, Bauindustrie, Ölindustrie und in der Elektro- sowie Energiebranche, Anwendung. Während die Polymermatrix den faserförmigen Füllstoff fixiert, für die Lastübertragung sorgt und den faserförmigen Füllstoff vor Umwelteinflüssen schützt, besteht die Aufgabe des faserförmigen Füllstoffs beispielsweise darin, die Last entlang der Faser zu leiten.

Durch geeignete Kombination von polymerer Matrix und faserförmigem Füllstoff lassen sich faserverstärkte Kompositwerkstoffe erhalten, die im Vergleich zur polymeren Matrix alleine verbesserte mechanische und physikalische Eigenschaften aufweisen.

Üblicherweise werden als polymere Matrixmaterialien für faserverstärkte Kompositwerkstoffe ungesättigte Polyester (UP)- und Polyvinyl (VP) Harze, Epoxide und in jüngster Zeit auch aromatische Polyurethan (PU) Systeme eingesetzt. Diese bekannten polymeren Matrixmaterialien weisen den Nachteil auf, dass sie im Kompositwerkstoff nicht ausreichend witterungsstabil sind und daher bei Verwendung im Außenbereich üblicherweise witterungsbeständig lackiert werden müssen. Eine solche Lackierung ist zum Teil mit erheblichem Aufwand verbunden, da die witterungsbeständige Lackschicht auf der Oberfläche des faserverstärkten Kompositwerkstoffs oftmals nur schlecht haftet, insbesondere wenn Trennmittel bei der Herstellung des Bauteils eingesetzt wurden. Die Bereitstellung von Kompositwerkstoffen mit guter Witterungsbeständigkeit ist daher wünschenswert.

Polymere mit Polyisocyanuratstrukturanteilen sind grundsätzlich für ihre gute Temperatur- und Chemikalienbeständigkeit bekannt. Insbesondere Polyurethanlacke mit Polyisocyanuratanteilen auf Basis aliphatischer Isocyanate weisen zudem sehr hohe Witterungsbeständigkeiten auf. Allerdings ist die vollständige Trimerisierung von Diisocyanaten zu Polyisocyanuratkunststoffen schwer zu kontrollieren. Aus diesem Grund finden aliphatische Polyisocyanurate üblicherweise nur als Vernetzungsmittel für Polyurethan Systeme in der Lack- und Klebstoffchemie praktische Anwendung, bei deren Herstellung die Trimerisierungsreaktion bereits bei niedrigen Umsätzen gestoppt wird und überschüssiges nicht abreagiertes monomeres Diisocyanat entfernt wird. So sehen die DE 31 00 263; GB 952 931, GB 966 338; US 3 211 703, US 3 330 828, EP 0 056 159 B1 und DE 32 19 608 A1 bei der Herstellung von Vernetzungsmitteln auf Basis von Polyisocyanuraten, ausgehend von aliphatischen und gemischt aliphatischen und aromatischen monomeren Diisocyanaten, entweder eine Durchführung der Reaktion in Verdünnung oder nur bis zu niedrigen Umsatzwerten bei sehr genauer Temperaturkontrolle vor. Dabei entstehen gezielt keine vollständig vernetzten Polyisocyanuratkunststoffe sondern nur oligomere, niedrigviskose, lösliche Produkte.

Daneben hat es auch Versuche gegeben, vollständig vernetzte Polyisocyanuratkunststoffe auf Basis aliphatischer witterungsbeständiger Isocyanate zu synthetisieren.

So beschreibt beispielsweise European Polymer Journal, Vol. 16, 147-148 (1980*)* die sehr langsame katalytische Trimerisierung von monomerem 1,6-Diisocyanatohexan (HDI) bei niedrigen Temperaturen von 40 °C zu einem klaren, transparenten Polyisocyanuratkunststoff. Hierzu werden allerdings sehr hohe Katalysatorkonzentrationen an Dibutylzinndimethoxid (ca. 10 Gew.-%) als Trimerisierungskatalysator benötigt, die die thermische Stabilität und Farbstabilität der Produkte stark negativ beeinflussen. Die Glasübergangstemperatur (Tg) beziehungsweise die thermische Wärmeformbeständigkeit wurden nicht untersucht. Der Gehalt an freien Isocyanatgruppen im Inneren des Feststoffes wurde nicht ermittelt. Nur die Zugscherfestigkeit bei Raumtemperatur wurde bestimmt und zeigte relativ niedrige Werte. Andere Diisocyanate wie IPDI, TDI oder MDI ergaben keine Feststoffe. Zudem ist die benötigte lange Reaktionszeit unwirtschaftlich und daher für viele Verarbeitungsprozesse ungeeignet.

European Polymer Journal, Vol. 16, 831-833 (1980*)* beschreibt die Trimerisierung von monomerem HDI zu einem festen Polyisocyanurat bei einer Temperatur von 140 °C unter Verwendung von 6 Gew.-% Tributylzinnoxid als extrem trägem Katalysator. Der genaue Umsatz der NCO-Gruppen sowie die Eigenschaften dieses Feststoffes sind allerdings nicht weiter beschrieben.

Die Dissertationsschrift Theo Flipsen: "Design, synthesis and properties of new materials based on densely crosslinked polymers for polymer optical fiber and amplifier applications", Rijksuniversiteit Groningen, 2000 beschreibt die Trimerisierung von monomerem HDI mit einem Neodym/Kronenether-Komplex als Katalysator. Das dabei erhaltene Polyisocyanurat, das gute optische, thermische und mechanische Eigenschaften aufweisen soll, wurde im Rahmen der Dissertation auf seine Eignung für optische Anwendungen, insbesondere als polymerer Lichtleiter untersucht. Nur unter idealen Bedingungen mit einem löslichen Neodym Kronenether Katalysator und einer Vorreaktion bei 60 °C oder Raumtemperatur und Nachreaktion bei Temperaturen von bis zu 140 °C werden gemäß Flipsen über einen langen Zeitraum von größer 24 h hochtransparente Polyisocyanurate mit einer Glasübergangstemperatur (T_{g}) von 140 °C erhalten. Nachteilig an dem beschriebenen Verfahren ist, dass es sich um einen langsamen mehrstufigen Prozess mit komplizierter Reaktionsführung handelt, dessen großtechnische Umsetzung problematisch ist. Zudem ist der als Katalysator verwendete Neodym/Kronenether-Komplex sehr teuer und daher für den Einsatz in einem großtechnischen Verfahren unwirtschaftlich.

Die GB 1 335 958 beschreibt die Herstellung eines Polyisocyanurat-Kompositwerkstoffs durch Imprägnieren von Glasfasergewebe mit einer 2:1 Mischung von Methylendiphenylisocyanat (MDI) und Trimethylhexamethylendiamin (TMHDI) in Gegenwart eines Benzyldimethylamin/Phenylglycidylether-Gemischs als Katalysator. Die Aushärtung des Polyisocyanuratkunststoffs erfolgte mittels komplizierter Temperaturführung über einen langen Zeitraum von 16 h bei 50°C, 1 h bei 100°C, 1 h bei 150°C und 3 h bei 180°C. Das beschriebene Verfahren dauert sehr lange und ist aufgrund der komplizierten Reaktionsführung großtechnisch schwer umzusetzen.

European Polymer Journal, Vol. 14, 675-678 (1978*)* beschreibt die Herstellung sowohl von HDIbasierten Polyisocyanurat-Feststoffen als auch von Polyisocyanurat-Kompositwerkstoffen. Diese zeigten im Vergleich zu Polyester- oder Epoxid-Kompositwerkstoffen ähnliche oder bessere Eigenschaften. Allerdings ist diese Verfahrensführung mit den benötigten langen Reaktionszeiten von mehr als 24 Stunden bei optimaler Katalysatorkonzentration von ca. 0,5 Gew.-% Bis(tributylzinn)-oxid industriell unwirtschaftlich und daher nicht praktikabel.

In der Patentanmeldung US 2009/005517 A1 beschreiben Bleys et al die Herstellung von Polyisocyanurat-Kompositwerkstoffen. Allerdings werden hier ausschließlich Beispiele auf Grundlage aromatischer Polyisocyanate aufgeführt. Von diesen ist aber bekannt, dass sie ein schlechtes Bewitterungsverhalten zeigen. Analytische Ergebnisse zu den hergestellten aromatischen Polyisocyanurat-Kompositmaterialien wurden nicht erwähnt. Weiterhin ist aus der Tabelle von Beispiel 5 ersichtlich, dass Polyethylenglykole (EO Polyether) im Katalysatorsystem bei Verwendung von reinen aromatischen Polyisocyanaten zu einer deutlichen Temperaturerhöhung schon nach kurzen Zeiten < 800 Sekunden führen. Da die Temperaturerhöhung auf eine vorzeitige Urethanisierungsreaktion oder Trimerisierungsreaktion hinweist ist mit einer deutlichen Viskositätserhöhung der Mischung zu rechnen, die eine praktische Anwendung erschweren oder unmöglich machen. Untersuchungen oder eine theoretische Diskussion zu aliphatischen Polyisocyanaten und deren möglichen Unterschieden zu aromatischen Isocyanaten wurde nicht durchgeführt. Die Vorteile der Verwendung von aliphatischen Polyisocyanaten zur Verbesserung der Reaktionskontrolle, zur Verlängerung der Topfzeit und Verbesserung der Bewitterungseigenschaften, oder gar die Kombination aus Polyethylenglykolen (EO-Polyethern) mit alkalischen Metallsalzen und aliphatischen Polyisocyanaten wurden nicht erwähnt oder beschrieben.

Ähnlich wie in der oben diskutierten US 2009/005517 offenbaren die Beispiele der US 2005/0163969 nur die Verwendung von aromatischen Polyisocyanaten. Zwar sind die Patentansprüche hinsichtlich des zu verwendenden Polyisocyanats generisch, doch offenbart die gesamte Anmeldung keinen Hinweis auf die mit der Verwendung aliphatischer Polyisocyanate verbundenen Vorteile.

Die Herstellung von Polyisocyanuratkunststoffen wird im Stand der Technik hauptsächlich ausgehend von flüssigen monomeren Diisocyanaten (z.B. Stearyldiisocyanat, Dodecyldiisocyanat, Decyldiisocyanat, Nonyldiisocyanat, Octyldiisocyanat, HDI, BDI, PDI, IPDI, H12MDI, TDI, MDI, NDI, NBDI), aliphatischer wie aromatischer Natur, beschrieben. Die Wärmetönung der Trimerisierungsreaktion zu Polyisocyanuraten ist dabei so hoch (-75 kJ/mol NCO), dass eine Reaktion ausgehend von monomeren Polyisocyanaten besonders bei kostengünstigen, monomeren Polyisocyanaten mit hohem Isocyanatgehalt (z.B. 1,4-Butandiisocyanat (BDI), 1,5-Pentamethylendiisocyanat (PDI), 1,6-Hexymethylendiisocyanat (HDI), Triisoycanatononan (TIN) nicht praxisgerecht durchgeführt werden kann. Dies gilt insbesondere im Hinblick auf den für industrielle Anwendungen erforderlichen Großmaßstab und adiabatische Bedingungen, wie sie typischerweise im Inneren von Volumenkörpern bei stark exothermen Polymerisationsverfahren auftreten. Im Stand der Technik erfolgte die Trimerisierung daher bislang nur in kleinen Substanzmengen unter strikter Temperaturkontrolle.

WO 2015/166983 beschreibt die Herstellung von Vergussmassen für LEDs aus Polyisocyanuratkunststoffen. Der Zusatz von Polyethern zum Katalysator wird nicht beschrieben. Auch die Herstellung von Kompositwerkstoffen wird nicht offenbart.

US 6,133,397 beschreibt die Herstellung von Beschichtungen durch Polymerisierung oligomerer Polyisocyanate. Die Herstellung von Volumenkörpern aus diesen Ausgangsstoffen ist nicht offenbart.

Eine adiabatische Zustandsänderung ist ein thermodynamischer Vorgang bei dem ein System von einem Zustand in einen anderen überführt wird, ohne Wärmeenergie mit seiner Umgebung auszutauschen. Unter "adiabatischen Bedingungen" wird hier verstanden, dass ein vollständiges Abführen der bei der exothermen Reaktion frei werdenden Reaktionswärme an die Umgebung nicht möglich ist. So können in Volumenkörpern typischerweise keine homogenen Bedingungen realisiert werden und es herrschen besonders im Inneren der Volumenkörper bei schnellen Reaktionen "adiabatische" Bedingungen vor, die bei exothermer Reaktion zu einer lokalen starken Temperaturerhöhung führen können. Diese lokalen Hotspots sind extrem kritisch, wenn es um die Herstellung von funktional homogenen Produkten geht.

Ferner ist problematisch, dass aromatische monomere Diisocyanate und viele arylaromatische oder alicyclische monomere Diisocyanate nur zu geringen Umsätzen homo- und co-trimerisiert werden können. Oftmals müssen weichmachende oder co-lösende Reaktionspartner hinzugegeben werden. Andernfalls friert die Reaktion bei hohen Restisocyanatgehalten ein und es werden typischerweise trübe und verfärbte Produkte erhalten. Die Verwendung von weichmachenden und co-lösenden Reaktionspartnern ist wiederum nachteilig, da diese zu weniger chemisch und thermisch inerten Aufbauelementen wie Allophanaten, Harnstoffen, Urethanen, Thiourethanen und Oxazolidinonen, Polyestern, Polyethern, sowie bei hohen Temperaturen zu Uretdionen mit anschließender Carbodiimidisierung und Kohlendioxid Abspaltung sowie zu asymmetrischen Isocyanuraten führen. Die Produktion von Polyisocyanuratkunststoffen, die weitgehend oder ausschließlich Isocyanuratstrukturen als Aufbauelement aufweisen ist daher nicht möglich.

Die Temperaturkontrolle, insbesondere auch bis in jedes kleinste Volumenelement des Formkörpers, bei der Herstellung von hochumgesetzten Polyisocyanuratkunststoffen ist von enormer Bedeutung, da aufgrund der hohen Isocyanatgehalte der monomeren Ausgangsprodukten unter adiabatischen Bedingungen, wie sie bei Trimerisierungen in Volumenkörpern typischerweise vorherrschen, aufgrund der exotherm verlaufenden Reaktion, Temperaturen von lokal über 300 °C, also beispielsweise oberhalb des Flammpunktes von monomerem HDI bei 140 °C sowie des Siedepunktes von monomerem HDI von 255 °C und sogar bis zur Selbstentzündungstemperatur von HDI von 454 °C, entstehen können. So können die hohen Temperaturen zur direkten Zersetzung der Produkte und sogar zur in situ Verdampfung und Selbstentzündung der monomeren Polyisocyanate führen.

Den oben genannten Verfahren ist gemeinsam, dass die Trimerisierung bei niedrigen Temperaturen gestartet wird. Höhere Trimerisierungstemperaturen besonders zu Beginn der Trimerisierung sind ausgehend von monomeren Polyisocyanaten nur schwer zu kontrollieren und führen zu erheblichen Nebenreaktionen in Form von Uretdionen sowie Carbodiimiden und sind somit ursächlich für Blasenbildung durch Kohlenstoffdioxid Abspaltung und Verfärbung des erhaltenen Produkts. Die ausgehend von den monomeren Diisocyanaten hergestellten Polyisocyanuratkunststoff-Volumenkörper weisen daher typischerweise Blasen auf, sind stark dunkel verfärbt und können somit bestimmten Vorgaben bezüglich Erscheinung, Dichte, elektrischem Isolationsverhalten und mechanischer Eigenschaften nicht genügen. Einzige Ausnahme ist die Trimerisierung in Gegenwart von hohen Konzentrationen extrem träger Katalysatoren wie z.B. Tributylzinnoxid. Die so durchgeführten, typischerweise mehrstündigen Vorreaktionen zu geringen Isocyanat Umsätzen von ca. 50 % bei Temperaturen oberhalb von 100 °C sind zur Herstellung von Polyisocyanurat-Kompositwerkstoffen zu aufwendig und daher großtechnisch nicht interessant.

Weiter ist den beschriebenen Verfahren gemein, dass sie nicht geeignet sind, um in effizienten technischen Verfahren besonders unter adiabatischen Bedingungen, wie sie typischerweise im Inneren von Volumenkörpern bei stark exothermen Reaktionen auftreten, hochumgesetzte Polyisocyanurat-Kompositwerkstoffe zu erhalten, insbesondere solche, die weitgehend frei von störenden Defekten in Form von Verfärbungen, Inhomogenitäten und unerwünschten Blasen sind und eine gute Bewitterungsstabilität, gute mechanische Eigenschaften, wie eine hohe Glasübergangstemperatur (Tg) und hohe Zugfestigkeiten aufweisen. Demgegenüber zeichnen sich technisch effiziente Verfahren durch hohe Umsatzraten und eine hohe Verfahrenssicherheit sowie Reproduzierbarkeit aus.

Aufgrund der schwer zu kontrollierenden Trimerisierung der monomeren Isocyanate zu Polyisocyanuratkunststoffen, ist deren praktische Anwendung als polymeres Matrixmaterial in Kompositwerkstoffen trotz der hervorragenden Witterungsbeständigkeit bisher großtechnisch ohne Bedeutung. Soweit aus dem Stand der Technik überhaupt faserverstärkte Polyisocyanurat-Kompositwerkstoffe bekannt sind, erscheinen diese bezüglich der Herstellungsbedingungen des Polyisocyanurat-Matrixmaterials, wie Reaktionsdauer und -kontrolle, verbesserungswürdig.

Der Erfindung lag somit die Aufgabe zugrunde, ein effizientes technisches Verfahren zur Herstellung von witterungsbeständigen faserverstärkten Polyisocyanurat-Kompositwerkstoffen bereitzustellen, das sich insbesondere durch kurze Reaktionszeiten und einfache Reaktionsführung auszeichnet. Die erhaltenen faserverstärkten Polyisocyanurat-Kompositwerkstoffe sollen ferner weitgehend frei von störenden Defekten in Form von Verfärbungen, Inhomogenitäten und unerwünschten Blasen sein.

Diese Aufgabe wird erfindungsgemäß durch das Verfahren zur Herstellung eines Polyisocyanurat-Kompositwerkstoffs gemäß Anspruch 1 und den daraus erhältlichen Polyisocyanurat-Kompositwerkstoff gemäß Anspruch 13 gelöst.

Vorteilhafte Ausgestaltungen der Erfindung sind in den abhängigen Ansprüchen angegeben und werden nachfolgend, wie der allgemeine Erfindungsgedanke, im Einzelnen erläutert.

Gegenstand der Erfindung ist ein Verfahren zur Herstellung eines Polyisocyanurat-Kompositwerkstoffs, umfassend die folgenden Schritte:
a) Bereitstellen einer Polyisocyanatzusammensetzung A), welche monomere Polyisocyanate in einer Menge von mindestens 2 Gew.-% und wenigstens 60 Gew.-% aliphatischer Polyisocyanate enthält, und
b) katalytische Trimerisierung der Polyisocyanatzusammensetzung A) in Gegenwart mindestens eines faserförmigen Füllstoffs B) und eines Trimerisierungskatalysators C) zum Polyisocyanurat-Kompositwerkstoff, wobei der Trimerisierungskatalysator C) mindestens ein quaternäres Ammonium- und/oder ein Metallsalz umfasst, wobei der Anteil des faserförmigen Füllstoffs bezogen auf das Gesamtgewicht des Polyisocyanurat-Kompositwerkstoffs wenigstens 30 Gew.-% beträgt.

Gegenstand der Erfindung sind ferner die durch das Verfahren erhältlichen Polyisocyanurat-Kompositwerkstoffe sowie deren Verwendung zur Herstellung von Bauteilen sowie Bauteile, bestehend aus oder enthaltend einen erfindungsgemäßen Polyisocyanuratkompositwerkstoff.

Überraschenderweise wurde gefunden, dass in der Lackchemie als Vemetzerrohstoffe bekannte monomere Polyisocyanate und deren Gemische mit oligomeren Polyisocyanaten in Gegenwart von quaternären Ammonium-, Alkalimetall- oder Erdalkalimetallsalzen als Katalysator, insbesondere von Kaliumacetat, und faserförmigen Füllstoffen schnell und effizient auch unter adiabatischen Bedingungen zu Polyisocyanurat-Kompositwerkstoffen mit hervorragender Witterungsbeständigkeit, Chemikalienbeständigkeit, sowie einer hohen Temperaturbeständigkeit und guten mechanischen Eigenschaften polymerisiert werden können. Ebenfalls werden bei Einsatz geeigneter monomerer Polyisocyanate und geeigneter Gemische monomerer und oligomerer Polyisocyanate selbst bei adiabatischer Temperaturführung Nebenreaktionen, die zu Blasen, Inhomogenitäten und Verfärbungen führen, weitgehend unterdrückt und die Reaktion kann reproduzierbar und kontrolliert durchgeführt werden. Das erfindungsgemäße Verfahren erlaubt die Herstellung von Polyisocyanurat-Kompositwerkstoffen unter quasi adiabatischen Bedingungen, ohne dass die eingesetzten Materialien oder gewünschten Reaktionsprodukte zersetzt werden oder oberhalb ihres Siedepunktes erhitzt werden.

Abweichend von den im Stand der Technik beschriebenen Verfahren kann die Trimerisierung nach dem erfindungsgemäßen Verfahren auch bei hohen Temperaturen und kurzen Reaktionszeiten durchgeführt werden, ohne dass es zu den im Stand der Technik beobachteten Nachteilen, wie Blasenbildung und Verfärbung kommt. Praktische Versuche haben z.B. gezeigt, dass eine vollständige Trimerisierung bei Temperaturen weit über 100°C durchgeführt werden kann. Besonders vorteilhaft kann die Trimerisierung bei Temperaturen oberhalb des Glaspunktes der gewünschten Produkte durchgeführt werden. Ferner hat sich durch praktische Versuche gezeigt, dass eine vollständige Trimerisierung nach dem erfindungsgemäßen Verfahren bei Reaktionszeiten von z.B. deutlich unter 30 Minuten möglich ist.

Ohne an wissenschaftliche Theorien gebunden sein zu wollen, könnte es sein, dass die Gegenwart von feinverteilten faserförmigen Füllstoffen während der Trimerisierungsreaktion eine Separierung des reagierenden Matrixmaterials in kleine Volumenelemente innerhalb des Volumenkörpers ermöglicht, die sich nicht schnell genug für eine unkontrollierte Reaktion austauschen können und somit dann kontrollierter abreagieren. Die Reaktion könnte also durch die Gegenwart der faserförmigen Füllstoffe diffusionsbestimmt ablaufen und hierdurch eine unkontrollierte Kettenreaktion unterbunden werden. Weiterhin könnte zumindest ein Teil der Reaktionswärme innerhalb der Reaktionszeit an das Fasermaterial abgeführt werden, was insbesondere eine schnelle Trimerisierungsreaktion ausgehend von monomeren Polyisocyanaten oder Gemischen aus monomeren und oligomeren Polyisocyanaten auch bei kurzen Reaktionszeiten und hohen Temperaturen ermöglicht.

Wenn hier von "Volumenkörper" die Rede ist, so ist damit ein Körper gemeint, bei dem aufgrund seines Volumens ein vollständiges Abführen der bei der Trimerisierungsreaktion entstehenden Wärme an die Umgebung nicht schnell genug möglich ist und folglich lokale Hotspots im Inneren des Volumenkörpers auftreten können, d.h. die Trimerisierungsreaktion erzeugt in einer bestimmten Zeit mehr Energie als in dieser Zeit an die Umgebung abgeführt werden kann. Insbesondere ist ein "Volumenkörper", wie hier verwendet, ein Körper, der in seiner kleinsten Ausdehnungsrichtung eine Dicke von mindestens 0,1 mm, bevorzugt mindestens 0,5 mm, besonders bevorzugt mindestens 1 mm insbesondere mindestens 2 mm und ganz besonders bevorzugt wenigstens 5 mm aufweist. Insbesondere ist ein "Volumenkörper", wie hier verwendet, keine Folie, Lackschicht oder Membran.

Ein "Polyisocyanurat-Kompositwerkstoff", wie hier verwendet, ist ein Kompositwerkstoff, dessen polymeres Matrixmaterial ein Kunststoff ist, der Polyisocyanurat enthält. Das polymere Matrixmaterial kann auch vorwiegend oder vollständig aus einem Polyisocyanurat bestehen. Ein polymeres Matrixmaterial aus Blends von Polyisocyanuraten und anderen Kunststoffen fällt ebenfalls unter den Begriff "Polyisocyanurat-Kompositwerkstoff", wie hier verwendet.

Wenn hier von "Werkstoff" die Rede ist, so ist damit ein Produkt gemeint, welches bei Raumtemperatur - im Gegensatz zu beispielsweise Gelen oder Flüssigkeiten - weitestgehend formbeständig ist. Der Begriff "Werkstoff", wie hier verwendet, umfasst alle üblichen Kunststoffklassen, d.h. insbesondere auch Duroplaste, Thermoplaste und Elastomere.

Wenn hier von "Polyisocyanatzusammensetzung A)" insbesondere von "Bereitstellen der Polyisocyanatzusammensetzung A)" die Rede ist, dann bedeutet dies, dass die Polyisocyanatzusammensetzung A) als Edukt existiert und eingesetzt wird.

Ein "Polyisocyanurat", wie hier verwendet, ist jedes Molekül, welches eine Pluralität an Isocyanurat Struktureinheiten, beispielsweise mindestens zehn Isocyanurat-Struktureinheiten, aufweist. Ein Molekül mit einer einzigen Isocyanurat Struktureinheit kann als "Isocyanurat" bezeichnet werden.

Die charakteristische, zyklische Isocyanurat Struktureinheit ist in folgender Strukturformel wiedergegeben:

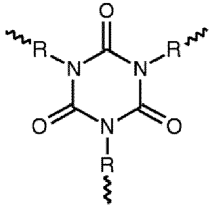

Isocyanurate und Polyisocyanurate lassen sich durch Cyclotrimerisierung von Isocyanaten und Polyisocyanaten erhalten. Die klassischerweise betriebene Cyclotrimerisierung ausgehend von monomeren Diisocyanaten ist - wie oben beschrieben - eine stark exotherm verlaufenden Reaktion. Dies kann die Anwendungsmöglichkeiten sowie die technisch und effizient noch realisierbaren Trimerisierungsgrade erheblich einschränken.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. Polyurethane, Polyharnstoffe und Polyisocyanurate) und niedermolekularen Verbindungen (z.B. Urethanprepolymere oder solche mit Uretdion-, Isocyanurat-, Allophanat-, Biuret-, Iminooxadiazindion- und/oder Oxadiazintrionstruktur) herstellen.

Wenn hier allgemein von "Polyisocyanaten" die Rede ist, so sind damit monomere und/oder oligomere Polyisocyanate gemeint. Zum Verständnis vieler Aspekte der Erfindung ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

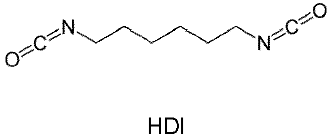

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomere Polyisocyanate" sind ausgehend von dem monomeren HDI z.B. das HDI-Isocyanurat und das HDI-Biuret, die jeweils aus drei monomeren HDI Bausteinen aufgebaut sind:

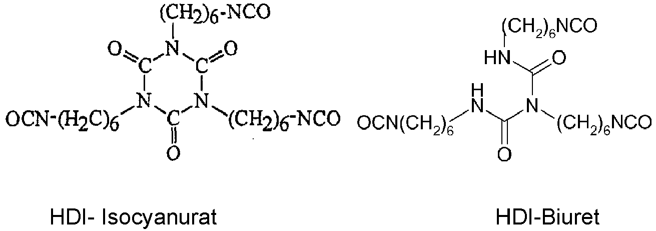

### (idealisierte Strukturformeln)

Auf Grund eines weiteren Verarbeitungsschrittes sind die oligomeren Polyisocyanate üblicherweise teurer als die monomeren Diisocyanate beziehungsweise monomeren Polyisocyanate aus denen die oligomeren Polyisocyanate hergestellt sind.

Unter "Polyisocyanatzusammensetzung A)" wird im Sinne der Erfindung die Isocyanatkomponente im anfänglichen Reaktionsgemisch bezeichnet. Anders ausgedrückt handelt es sich dabei um die Summe aller Verbindungen im anfänglichen Reaktionsgemisch, die Isocyanat-Gruppen aufweisen. Die Polyisocyanatzusammensetzung A) wird also als Edukt im erfindungsgemäßen Verfahren eingesetzt. Wenn hier von "Polyisocyanatzusammensetzung A)" insbesondere von "Bereitstellen der Polyisocyanatzusammensetzung A)" die Rede ist, dann bedeutet dies, dass die Polyisocyanatzusammensetzung A) als Edukt existiert und eingesetzt wird.

Die oligomeren Polyisocyanate weisen gegenüber den monomeren Polyisocyanaten eine stark erhöhte Viskosität auf und sind in diesen gut löslich. Daher kann über das Mischungsverhältnis von monomeren und oligomeren Polyisocyanaten die Viskosität einfach über einen großen Bereich an den Verarbeitungsprozess angepasst werden.

Erfindungsgemäß enthält die Polyisocyanatzusammensetzung A) mindestens 2 Gew.-% monomere Polyisocyanate.

Gemäß einer Ausführungsform der Erfindung besteht die Polyisocyanatzusammensetzung A) vollständig oder zu mindestens 3, 4, 5, 10, 25, 40, 60, 80, 85, 90, 95, 98, 99 oder 99,5 Gew.-%, jeweils bezogen auf das Gewicht der Polyisocyanatzusammensetzung A), aus monomeren Polyisocyanaten.

Die erfindungsgemäß bei der Trimerisierung als Edukt eingesetzte Polyisocyanatzusammensetzung A) kann neben den monomeren Polyisocyanaten oligomere Polyisocyanate enthalten. Gemäß einer Ausführungsform der Erfindung enthält die Polyisocyanatzusammensetzung A) zu mindestens 0,5; 1; 2; 5; 10; 15; 20; 60; 75; 90; 95; 96; 97; 98 Gew.-%, jeweils bezogen auf das Gewicht der Polyisocyanatzusammensetzung A), oligomere Polyisocyanate. Dieser Gehalt an oligomeren Polyisocyanaten bezieht sich auf die Polyisocyanatzusammensetzung A), d.h. diese werden nicht etwa während des erfindungsgemäßen Verfahrens als Zwischenprodukt gebildet, sondern liegen bereits zu Beginn der Reaktion in der als Edukt eingesetzten Polyisocyanatzusammensetzung A) vor. Bei den oben genannten monomeren Polyisocyanaten und den oligomeren Polyisocyanaten handelt es sich vorzugsweise um Diisocyanate. Ganz besonders bevorzugt wird als monomeres Diisocyanat ein solches Diisocyanat verwendet, das auch zum Aufbau des oligomeren Polyisocyanats verwendet wurde.

In einer besonders bevorzugten Ausführungsform enthält die Polyisocyanatzusammensetzung A) bezogen auf ihr Gesamtgewicht wenigstens 40 Gew.-% oligomere Polyisocyanate und wenigstens 10 Gew.-%, stärker bevorzugt wenigstens 20 Gew.-%, noch stärker bevorzugt wenigstens 30 Gew.-% und am stärksten bevorzugt wenigstens 40 Gew.-% monomere Polyisocyanate. Besonders bevorzugt werden eventuell vorhandene monomere Fremddiisocyanate, monomere Monoisocyanate und monomere Polyisocyanate mit einer Isocyanatfunktionalität von größer als 2 nicht auf den vorgenannten Gewichtsanteil monomerer Polyisocyanate angerechnet, so dass dieser Anteil nur den Gewichtsanteil monomere Diisocyanate angibt.

In einer weiteren besonders bevorzugten Ausführungsform enthält die Polyisocyanatzusammensetzung A) bezogen auf ihr Gesamtgewicht wenigstens 75 Gew.-% oligomere Polyisocyanate und wenigstens 2 Gew.-%, stärker bevorzugt wenigstens 5 Gew.-%, noch stärker bevorzugt wenigstens 10 Gew.-% und am stärksten bevorzugt wenigstens 15 Gew.-% monomere Polyisocyanate. Besonders bevorzugt werden eventuell vorhandene monomere Fremddiisocyanate, monomere Monoisocyanate und monomere Polyisocyanate mit einer Isocyanatfunktionalität von größer als 2 nicht auf den vorgenannten Gewichtsanteil monomerer Polyisocyanate angerechnet, so dass dieser Anteil nur den Gewichtsanteil monomere Diisocyanate angibt.

In einer weiteren besonders bevorzugten Ausführungsform enthält die Polyisocyanatzusammensetzung A) bezogen auf ihr Gesamtgewicht wenigstens 90 Gew.-% oligomere Polyisocyanate und wenigstens 2 Gew.-%, stärker bevorzugt wenigstens 5 Gew.-% und noch stärker bevorzugt wenigstens 7,5 Gew.-% monomere Polyisocyanate. Besonders bevorzugt werden eventuell vorhandene monomere Fremddiisocyanate, monomere Monoisocyanate und monomere Polyisocyanate mit einer Isocyanatfunktionalität von größer als 2 nicht auf den vorgenannten Gewichtsanteil monomerer Polyisocyanate angerechnet, so dass dieser Anteil nur den Gewichtsanteil monomere Diisocyanate angibt.

Gemäß einer weiteren besonderen Ausführungsform der Erfindung kann die Polyisocyanatzusammensetzung A) ein oder mehrere monomere Fremddiisocyanate enthalten. Hierbei bedeutet monomeres Fremdiisocyanat, dass es sich von den monomeren Polyisocyanaten, die zur Herstellung der in der Polyisocyanatzusammensetzung A) enthaltenen oligomeren Polyisocyanaten verwendet wurden, unterscheidet. Eine Zugabe von monomerem Fremddiisocyanat kann zur Erzielung spezieller technischer Effekte, wie z.B. einer besonderen Härte, einer gewünschten Elastizität oder Dehnung, einer gewünschten Glasübergangstemperatur oder Viskosität, bei der Verarbeitung vorteilhaft sein. Besonders praxisgerechte Ergebnisse stellen sich ein, wenn die Polyisocyanatzusammensetzung A) einen Anteil an monomeren Fremddiisocyanat in der Polyisocyanatzusammensetzung A) von höchstens 50 Gew.-%, insbesondere höchstens 25 Gew.-% oder höchstens 10 Gew.-%, jeweils bezogen auf das Gewicht der Polyisocyanatzusammensetzung A), aufweist. Vorzugsweise weist die Polyisocyanatzusammensetzung A) einen Gehalt an monomeren Fremddiisocyanat von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A), auf.

Gemäß einer weiteren besonderen Ausführungsform des erfindungsgemäßen Verfahrens, kann die Polyisocyanatzusammensetzung A) monomere Monoisocyanate mit einer Isocyanatfunktionalität von 1 oder monomere Isocyanate mit einer Isocyanatfunktionalität größer 2, d.h. mit mehr als zwei Isocyanatgruppen pro Molekül, enthalten. Die Zugabe von monomeren Monoisocyanaten mit einer Isocyanatfunktionalität von 1 oder monomeren Isocyanaten mit einer Isocyanatfunktionalität größer zwei hat sich als vorteilhaft erwiesen, um die Netzwerkdichte und/oder Glasübergangstemperatur des Polyisocyanuratkunststoffs zu beeinflussen. Die mittlere Isocyanatfunktionalität der Polyisocyanatzusammensetzung A) ist dabei größer 1, bevorzugt größer 1,25, insbesondere größer 1,5, besonders bevorzugt größer 1,75 und ganz besonders bevorzugt größer 2. Die mittlere Isocyanatfunktionalität der Polyisocyanatzusammensetzung A) lässt sich berechnen, indem die Summe der Isocyanatfunktionalitäten aller in der Polyisocyanatzusammensetzung A) enthaltenen Polyisocyanatmoleküle durch die Anzahl der in der Polyisocyanatzusammensetzung A) enthaltenen Polyisocyanatmoleküle geteilt wird. Besonders praxisgerechte Ergebnisse stellen sich ein, wenn die Polyisocyanatzusammensetzung A) einen Anteil an monomeren Monoisocyanaten mit einer Isocyanatfunktionalität von 1 oder monomeren Isocyanaten mit einer Isocyanatfunktionalität größer zwei in der Polyisocyanatzusammensetzung A) von höchstens 40 Gew.-%, insbesondere höchstens 25 Gew.-% oder höchstens 10 Gew.-%, jeweils bezogen auf das Gewicht der Polyisocyanatzusammensetzung A), aufweist. Vorzugsweise weist die Polyisocyanatzusammensetzung A) einen Gehalt an monomeren Monoisocyanaten mit einer Isocyanatfunktionalität von 1 oder monomeren Isocyanaten mit einer Isocyanatfunktionalität größer 2 von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A), auf. Vorzugsweise wird bei der erfindungsgemäßen Trimerisierungsreaktion kein monomeres Monoisocyanat mit einer Isocyanatfunktionalität von 1 oder monomeres Isocyanat mit einer Isocyanatfunktionalität größer 2 mitverwendet.

Die hier beschriebenen oligomeren Polyisocyanate werden üblicherweise durch Modifizierung einfacher aliphatischer, cycloaliphatischer, araliphatischer und/oder aromatischer monomerer Diisocyanate oder Mischungen solcher monomeren Diisocyanate erhalten.

Die oligomeren Polyisocyanate können erfindungsgemäß insbesondere Uretdion-, Urethan-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

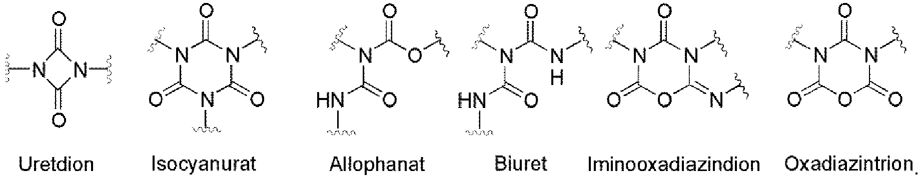

Überraschend hat sich herausgestellt, dass es vorteilhaft sein kann, oligomere Polyisocyanate einzusetzen, die eine Mischung aus mindestens zwei oligomeren Polyisocyanaten darstellen, wobei sich die mindestens zwei oligomere Polyisocyanate in ihrer Struktur unterscheiden. Diese ist vorzugsweise ausgewählt aus der Gruppe bestehend aus Uretdion-, Urethan-, Isocyanurat-, Allophanat-, Biuret-, Iminooxadiazindion- und Oxadiazintrionstruktur und deren Mischungen. Derartige Ausgangsmischungen können insbesondere im Vergleich zu Trimerisierungsreaktionen mit oligomeren Polyisocyanaten nur einer definierten Struktur zu einer Beeinflussung des Tg-Wertes führen, was für viele Anwendungen vorteilhaft ist.

Bevorzugt wird im erfindungsgemäßen Verfahren eine Polyisocyanatzusammensetzung A), die aus mindestens einem oligomeren Polyisocyanat mit Biuret-, Allophanat-, Isocyanurat- und/oder Iminooxadiazindionstruktur und Mischungen davon besteht, eingesetzt. Bevorzugt wird im erfindungsgemäßen Verfahren eine Polyisoycanatzusammensetzung A) eingesetzt, die höchstens 50 mol-%, bevorzugt höchstens 40 mol-%, besonders bevorzugt höchstens 30 mol-%, ganz besonders bevorzugt höchstens 20 mol-%, 10 mol-%, 5 mol-%, 3 mol-%, 2 mol-%, 1 mol-%, insbesondere keine oligomeren Polyisocyanurate mit Urethanstruktur, wie beispielsweise Urethanprepolymere, enthält.

Gemäß einer anderen Ausführungsform handelt es sich bei der Polyisocyanatzusammensetzung A), welche oligomere Polyisocyanate enthält, um eine solche, die nur eine einzelne definierte oligomere Struktur, beispielsweise ausschließlich oder größtenteils Isocyanuratstruktur, enthält. In der Regel liegen in der Polyisocyanatzusammensetzung A) herstellungsbedingt aber immer mehrere unterschiedliche oligomere Strukturen nebeneinander vor.

Im Rahmen der vorliegenden Erfindung wird eine Polyisocyanatzusammensetzung A), als Polyisocyanatzusammensetzung einer einzelnen definierten oligomeren Struktur angesehen, wenn eine oligomere Struktur ausgewählt aus Uretdion-, Urethan-, Isocyanurat-, Allophanat-, Biuret-, Iminooxadiazindion- und/oder Oxadiazintrionstruktur zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Urethan-, Isocyanurat-, Allophanat-, Biuret-, Iminooxadiazindion- und Oxadiazintrionstruktur in der Polyisocyanatzusammensetzung A), vorliegt.

Im erfindungsgemäßen Verfahren wird gemäß einer weiteren Ausführungsform eine Polyisocyanatzusammensetzung A) einer einzelnen definierten oligomeren Struktur eingesetzt, wobei die oligomere Struktur aus Uretdion-, Urethan-, Isocyanurat-, Allophanat-, Biuret-, Iminooxadiazindion- und/oder Oxadiazintrionstruktur ausgewählt ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Urethan-, Isocyanurat-, Allophanat-, Biuret-, Iminooxadiazindion- und Oxadiazintrionstruktur in der Polyisocyanatzusammensetzung A), vorliegt.

Gemäß einer weiteren Ausführungsform handelt es sich bei den oligomeren Polyisocyanaten um solche, die hauptsächlich Isocyanuratstruktur aufweisen, und die oben genannten Uretdion-, Urethan-, Allophanat-, Biuret-, Iminooxadiazindion- und/oder Oxadiazintrionstruktur lediglich als Nebenprodukte enthalten dürfen. So sieht eine Ausführungsform der Erfindung den Einsatz einer Polymerzusammensetzung A) einer einzelnen definierten oligomeren Struktur vor, wobei die oligomere Struktur eine Isocyanuratstruktur ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Urethan-, Isocyanurat-, Allophanat-, Biuret-, Iminooxadiazindion- und Oxadiazintrionstruktur in der Polyisocyanatzusammensetzung A), vorliegt.

Es ist erfindungsgemäß ebenfalls möglich oligomere Polyisocyanate einzusetzen, die weitestgehend keine Isocyanuratstruktur aufweisen, und hauptsächlich mindestens einen der oben genannten Uretdion-, Urethan-, Allophanat-, Biuret-, Iminooxadiazindion- und/oder Oxadiazintrion-Strukturtypen enthalten. Gemäß einer besonderen Ausführungsform der Erfindung besteht die Polyisocyanatzusammensetzung A) zu 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Urethan-, Isocyanurat-, Allophanat-, Biuret, Iminooxadiazindion- und Oxadiazintrionstruktur in der Polyisocyanatzusammensetzung A), aus oligomeren Polyisocyanaten, die einen Strukturtyp ausgewählt aus der Gruppe bestehend aus Uretdion-, Urethan-, Allophanat-, Biuret-, Iminooxadiazindion- und/oder Oxadiazintrionstruktur aufweisen.

Eine weitere Ausführungsform der Erfindung sieht den Einsatz einer isocyanuratarmen Polyisocyanatzusammensetzung A) vor, welche, bezogen auf die Summe der vorliegenden oligomeren Strukturen aus der Gruppe, bestehend aus Uretdion-, Urethan-, Isocyanurat-, Allophanat-, Biuret, Iminooxadiazindion- und Oxadiazintrionstruktur in der Polyisocyanatzusammensetzung A), weniger als 50 mol-%, vorzugsweise weniger als 40 mol-%, bevorzugt weniger als 30 mol-%, besonders bevorzugt weniger als 20 mol-%, 10 mol-% oder 5 mol-% Isocyanuratstrukturen aufweist.

Eine weitere Ausführungsform der Erfindung sieht den Einsatz einer Polymerzusammensetzung A) eines einzelnen definierten oligomeren Strukturtyps vor, wobei der oligomere Strukturtyp ausgewählt ist aus der Gruppe bestehend aus Uretdion-, Allophanat-, Biuret-, Iminooxadiazindion- und/oder Oxadiazintrionstruktur und dieser Strukturtyp zu mindestens 50 mol-%, vorzugsweise 60 mol-%, bevorzugt 70 mol-%, besonders bevorzugt 80 mol-%, insbesondere 90 mol-% , bezogen auf die Summe der vorliegenden oligomeren Strukturen aus der Gruppe, bestehend aus Uretdion-, Urethan-, Isocyanurat-, Allophanat-, Biuret, Iminooxadiazindion- und Oxadiazintrionstruktur in der Polyisocyanatzusammensetzung A), vorliegt.

Die Anteile an Uretdion-, Urethan-, Isocyanurat-, Allophanat-, Biuret-, Iminooxadiazindion- und/oder Oxadiazintrionstruktur in der Polyisocyanatzusammensetzung A) können beispielsweise aus den Integralen protonenentkoppelter ¹³C-NMR-Spektren errechnen, da die genannten oligomeren Strukturen charakteristische Signale liefern, und beziehen sich jeweils auf die Summe an vorliegenden Uretdion-, Urethan-, Isocyanurat-, Allophanat-, Biuret-, Iminooxadiazindion- und/oder Oxadiazintrionstrukturen in der Polyisocyanatzusammnensetzung A).

Unabhängig vom zugrunde liegenden oligomeren Strukturtyp (Uretdion-, Urethan-, Isocyanurat-, Allophanat-, Biuret-, Iminooxadiazindion- und/oder Oxadiazintrionstruktur) weist die beim erfindungsgemäßen Verfahren einzusetzende Polyisocyanatzusammensetzung A) vorzugsweise eine (mittlere) NCO-Funktionalität von 1,0 bis 6,0, bevorzugt 2,0 bis 5,0, vorzugsweise von 2,3 bis 4,5 auf.

Besonders praxisgerechte Ergebnisse stellen sich ein, wenn die erfindungsgemäß einzusetzende Polyisocyanatzusammensetzung A) einen Gehalt an Isocyanatgruppen von 8,0 bis 60,0 Gew.-% aufweist. Als besonders praxisgerecht hat es sich erwiesen, wenn die erfindungsgemäße Polyisocyanatzusammensetzung A) einen Gehalt an Isocyanatgruppen von 14,0 bis 30,0 Gew.-%, jeweils bezogen auf das Gewicht der Polyisocyanatzusammensetzung A), aufweist.

Herstellverfahren für oligomere Polyisocyanate mit Uretdion-, Urethan-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Gemäß einer zusätzlichen oder alternativen Ausführungsform der Erfindung ist die Polyisocyanatzusammensetzung A) dadurch definiert, dass sie oligomere Polyisocyanate enthält, die aus monomeren Polyisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurden. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Uretdion-, Urethan-, Isocyanurat-, Allophanat-, Biuret-, Iminooxadiazindion- und/oder Oxadiazintrionstrukturen verbraucht wird.

Geeignete monomere Polyisocyanate für die Polyisocyanatzusammensetzung A) oder Ausgangsverbindungen für die oligomeren Polyisocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche monomere Polyisocyanate. Besonders gute Ergebnisse stellen sich ein, wenn es sich bei den monomeren Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-lsocyanato-3,3,5-trimethyl-5-isocyanatomethyl-cyclohexan (Isophorondiisocyanat; IPDI), 1-lsocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136*.*

Ferner können in dem erfindungsgemäßen Verfahren auch klassische aliphatische oder aromatische Isocyanat-Endgruppentragende Prepolymere, wie beispielsweise aliphatische oder aromatische Isocyanat- Endgruppentragende Polyether-, Polyester-, Polycarbonat-Prepolymere als Mono- und Polyisocyanate in der Polyisocyanatzusammensetzung A) eingesetzt werden.

Geeignete monomere Monoisocyanate, die in der Polyisocyanatzusammensetzung A) gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das der Polyisocyanatzusammensetzung A) gegebenenfalls zugesetzt werden kann, sei beispielhaft 4-Isocyanatomethyl-1,8-octandiisocyanat (Triisocyanatononan; TIN) genannt.

Gemäß einer Ausführungsform der Erfindung enthält die Polyisocyanatzusammensetzung A) höchstens 80 Gew.-%, insbesondere höchstens 50 Gew.-%, stärker bevorzugt höchstens 39 Gew.-%, höchstens 25 Gew.-%, höchstens 10 Gew.-%, höchstens 5 Gew.-% oder höchstens 1 Gew.-%, jeweils bezogen auf das Gewicht der Polyisocyanatzusammensetzung A), an aromatischen Polyisocyanaten. Wie hier verwendet, bedeutet "aromatisches Polyisocyanat" ein Polyisocyanat, welches mindestens eine aromatisch gebundene Isocyanatgruppe aufweist.

Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform der vorliegenden Erfindung wird eine Polyisocyanatzusammensetzung A) eingesetzt, die Polyisocyanate mit aliphatisch und/oder cycloaliphatisch gebundenen Isocyanatgruppen zu wenigstens 60 Gew.-%, stärker bevorzugt zu wenigstens 70 Gew.-%, noch stärker bevorzugt zu wenigstens 80 Gew.-% und am stärksten bevorzugt zu wenigstens 90 Gew.-% enthält.

Gemäß einer besonders bevorzugten Ausführungsform des erfindungsgemäßen Verfahrens wird eine Polyisocyanatzusammensetzung A) eingesetzt, die ausschließlich aliphatisch und/oder cycloaliphatisch gebundene Isocyanat-Gruppen aufweist.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind.

Gemäß einer anderen bevorzugten Ausführungsform des erfindungsgemäßen Verfahrens wird eine Polyisocyanatzusammensetzung A) eingesetzt, die aus einem oder mehreren oligomeren Polyisocyanaten besteht oder diese enthält, wobei die ein oder mehreren oligomeren Polyisocyanate ausschließlich aliphatisch und/oder cycloaliphatisch gebundene Isocyanat-Gruppen aufweisen.

Gemäß einer anderen bevorzugten Ausführungsform des erfindungsgemäßen Verfahrens wird eine Polyisocyanatzusammensetzung A) eingesetzt, die aus einem oder mehreren monomeren Polyisocyanaten besteht oder diese enthält, wobei die ein oder mehreren monomeren Polyisocyanate ausschließlich aliphatisch und/oder cycloaliphatisch gebundene Isocyanat-Gruppen aufweisen.

Gemäß einer weiteren Ausführungsform der Erfindung besteht die Polyisocyanatzusammensetzung A) zu mindestens 70, 80, 85, 90, 95, 98 oder 99 Gew.-%, jeweils bezogen auf das Gewicht der Polyisocyanatzusammensetzung A), aus monomeren und/oder oligomeren Polyisocyanaten, die ausschließlich aliphatisch und/oder cycloaliphatisch gebundene Isocyanat-Gruppen aufweisen. Praktische Versuche haben gezeigt, dass sich besonders gute Ergebnisse mit Polyisocyanatzusammensetzungen A) erzielen lassen, bei denen die darin enthaltenen oligomeren Polyisocyanate ausschließlich aliphatisch und/oder cycloaliphatisch gebundene Isocyanat-Gruppen aufweisen.

Gemäß einer besonders bevorzugten Ausführungsform des erfindungsgemäßen Verfahrens wird eine Polyisocyanatzusammensetzung A) eingesetzt, die aus einem oder mehreren oligomeren Polyisocyanaten besteht oder diese enthält, wobei die ein oder mehreren oligomeren Polyisocyanate auf Basis von 1,4-Diisocyanatobutan (BDI), 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

Gemäß einer alternativen Ausführungsform des erfindungsgemäßen Verfahrens wird eine Polyisocyanatzusammensetzung A) eingesetzt, die eines oder mehrere monomere Polyisocyanate, ausgewählt aus 1,4-Diisocyanatobutan (BDI), 1,5-Diisocyanatopentan, (PDI), 1,6-Diisocyanatohexan (HDI), Isophorondiisocyanat (IPDI), Xylylendiisocyanat (XDI, Cyclohexyldiisocyanat (H6TDI) oder 4,4'-Diisocyanatodicyclohexylmethan (H12MDI) oder deren Mischungen, enthält.

Die katalytische Trimerisierung der Polyisocyanatzusammensetzung A) findet gemäß dem erfindungsgemäßen Verfahren in Gegenwart eines faserförmigen Füllstoffs B) statt, wobei der Anteil des besagten Füllstoffs bezogen auf das Gesamtgewicht des Polyisocyanurat-Kompositwerkstoffs wenigstens 30 Gew.-% beträgt.

Geeignete faserförmige Füllstoffe B) sind beispielsweise alle dem Fachmann bekannten anorganischen Fasern, organischen Fasern, Naturfasern oder deren Mischungen.

Als faserförmige Füllstoffe werden Materialien verstanden, deren Aspektverhältnis, d.h. die Länge geteilt durch den Durchmesser, größer 5, bevorzugt größer 20, insbesondere größer 50 und besonders bevorzugt größer 100 ist.

Beispiele für erfindungsgemäß geeignete anorganische Fasern sind Glasfasern, Basaltfasern, Borfasern, Keramikfasern, Whisker, Kieselsäurefasern sowie metallische Verstärkungsfasern. Beispiele für erfindungsgemäß geeignete organische Fasern sind Aramidfasern, Kohlenstofffasern, Polyester-Fasern, Nylon-Fasern sowie Plexiglas-Fasern. Beispiele für erfindungsgemäß geeignete Naturfasern sind Flachs-Fasern, Hanf-Fasem, Holzfasern, Cellulosefasern sowie Sisalfasern.

Gemäß einer bevorzugten Ausführungsform der Erfindung weisen die einzelnen Fasern einen Durchmesser von weniger 0,1 mm, bevorzugt weniger 0,05 mm, besonders bevorzugt weniger 0,02 mm, insbesondere weniger 0,015 mm, ganz besonders bevorzugt weniger 0,01 mm, auf.

Gemäß einer bevorzugten Ausführungsform der Erfindung wird der faserförmige Füllstoff B) ausgewählt aus der Gruppe bestehend aus Glasfasern, Basaltfasern, Kohlenstofffasern und deren Mischungen.

Gemäß einer besonders bevorzugten Ausführungsform der Erfindung werden als faserförmige Füllstoffe Glasfasern und/ oder Kohlenstofffasern, insbesondere Glasfasern eingesetzt.

Gemäß einer bevorzugten Ausführungsform der Erfindung beträgt der Fasergehalt in dem Polyisocyanurat-Kompositwerkstoff besonders bevorzugt mehr als 50 Gew.-%, vorzugsweise mehr als 60 Gew.-%, ganz besonders bevorzugt mehr als 70 Gew.-%, insbesondere 80, 85, 90 Gew.-% bezogen auf den Polyisocyanurat-Kompositwerkstoff.

Der Fasergehalt des Werkstoffs wird in Abhängigkeit von der Reaktionsenthalpie der in der Gesamtmenge der eingesetzten Polyisocyanatzusammensetzung A enthaltenen Isocyanatgruppen vorzugsweise so ausgewählt, dass bei einer Umsetzung von wenigstens 90 mol-% der insgesamt vorliegenden Isocyanatgruppen zu Cyanuratgruppen in einem Zeitraum von 30 Minuten, stärker bevorzugt von 10 Minuten, bei einer Außentemperatur von 150 °C ein Verhältnis von 2000 K/kg nicht überschritten wird. In der Studie, die der vorliegenden Anmeldung zugrunde liegt hat sich gezeigt, dass eine Überschreitung dieses Verhältnisses zu Blasenbildung des Matrixmaterials und/oder zu starker Gelbfärbung mit b-Werten über 9 führt.

Die erfindungsgemäßen Polyisocyanurate sind durch katalytische Trimerisierung gemäß dem erfindungsgemäßen Verfahren erhältlich. "Katalytisch" bedeutet dabei in Gegenwart eines geeigneten Trimerisierungskatalysators C).

Geeignete Trimerisierungskatalysatoren C) für das erfindungsgemäße Verfahren sind prinzipiell alle Verbindungen, die mindestens ein quaternäres Ammonium-, und/oder ein Metallsalz umfassen und welche geeignet sind die Trimerisierung von Isocyanatgruppen zu Isocyanuratstrukturen zu beschleunigen. Erfindungsgemäß umfasst der Trimerisierungskatalysator C) mindestens ein quaternäres Ammonium und/oder ein Metallsalz als Katalysator. Im Rahmen der Erfindung wird unter einem "quaternären Ammonium" eine Verbindung der Formel NR₄⁺ verstanden, wobei es sich bei dem Rest "R" um organische Reste, insbesondere Alkyl- oder Arylreste, handelt. Bevorzugt handelt es sich bei dem quaternären Ammonium um eine Verbindung der Formel NR₄⁺, wobei jeder der Reste R, unabhängig voneinander, ein linearer oder verzweigter Alkylrest mit 1 bis 5 C-Atomen ist.

Bevorzugte Trimerisierungskatalysatoren C) umfassen als Metallsalz Carboxylate und Alkoholate von Metallen. Besonders bevorzugte Trimerisierungskatalysatoren C) umfassen Metallsalze aliphatischer Carbonsäuren mit 1 bis 20, insbesondere 1 bis 10, C-Atomen, beispielsweise Metallsalze der Ameisensäure, Essigsäure, Propionsäure, Buttersäure, Valeriansäure, Capronsäure, Önanthsäure, Caprylsäure, Pelargonsäure und Caprinsäure. Besonders bevorzugt sind Acetatsalze.

Gemäß einer bevorzugten Ausführungsform des erfindungsgemäßen Verfahrens umfasst der Trimerisierungskatalysator C) als Metallkomponente ein Element aus gewählt aus der Gruppe bestehend aus Alkalimetallen, Erdalkalimetallen, Zinn, Zirkonium, Zink, Eisen und Titan.

Gemäß einer besonders bevorzugten Ausführungsform des erfindungsgemäßen Verfahrens umfasst der Trimerisierungskatalysator C) als Metallkomponente ein Alkalimetall- oder Erdalkalimetall. Besonders bevorzugte Metallkomponenten sind Natrium und Kalium.

Gemäß einer weiteren besonders bevorzugten Ausführungsform des erfindungsgemäßen Verfahrens umfasst der Trimerisierungskatalysator C) als Metallkomponente ein alkalisches Alkalimetall- oder Erdalkalimetallsalz, welches als gesättigte wässrige Lösung einen pH Wert von größer 7, besonders größer 8 und insbesondere größer 9 (gemessen mit Lackmuspapier) bei 23 °C aufweist. Besonders bevorzugt sind Natrium- und Kaliumsalze. Am besten werden Kaliumsalze verwendet.

Gemäß einer weiteren bevorzugten Ausführungsform ist das Metallsalz ein Alkalimetall- oder Erdalkalimetallacetat oder -octoat, ganz besonders bevorzugt ein Alkalimetallacetat. Ebenfalls bevorzugt ist Zinnoctoat.

In einer weiteren bevorzugten Ausführungsform umfasst der Trimerisierungskatalysator C) einen Polyether. Bevorzugte Polyether sind ausgewählt aus der Gruppe bestehend aus Kronenether, Polyethylen- und Polypropylenglykolen. Als besonders praxisgerecht hat sich im erfindungsgemäßen Verfahren erwiesen einen Trimerisierungskatalysator C) einzusetzen, der als Polyether ein Polyethylenglykol oder einen Kronenether, besonders bevorzugt 18-Krone-6 oder 15-Krone-5, umfasst. Bevorzugt kann der Trimerisierungskatalysator C) ein Polyethylenglykol mit einem zahlenmittleren Molekulargewicht von 100 bis 1000 g/mol, bevorzugt von 106 bis 1000 g/mol, stärker bevorzugt 200 g/mol bis 800 g/mol, besonders bevorzugt 300 g/mol bis 500 g/mol und insbesondere 350 g/mol bis 450 g/mol, umfassen. Der Begriff "Polyethylenglykol", wie er in dieser Anmeldung verwendet wird, schließt Diethylenglykol ein.

Das zahlenmittlere Molekulargewicht wird im Rahmen dieser Anmeldung stets bestimmt durch Gelpermeationschromatographie (GPC) in Tetrahydrofuran bei 23°C. Es wird dabei vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8×300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 1 festgelegt.

Ganz besonders bevorzugte Trimerisierungskatalysatoren C) für das erfindungsgemäße Verfahren umfassen als Alkalimetallsalz Kaliumacetat oder Kaliumoctoat und als Polyether Polyethylenglykole, insbesondere Kaliumacetat und Polyethylenglykol mit einem zahlenmittleren Molekulargewicht von 400 g/mol.

Die Trimerisierungskatalysatoren C) können sowohl einzeln als auch in Form beliebiger Gemische untereinander im erfindungsgemäßen Verfahren eingesetzt werden.

Die Katalysatorkonzentration ist neben der Temperatur eine wichtige Einstellgröße für den Prozess zur Herstellung der Polyisocyanurat-Kompositwerkstoffe. Ist die Konzentration des Katalysators in der reaktiven Harzmischung zu niedrig, ist die Vernetzungsreaktion insgesamt zu langsam und der Prozess ineffizient. Ist die Katalysatorkonzentration in der reaktiven Harzmischung zu hoch, verringert dies die Topfzeit der Harzmischung, definiert als die Zeitspanne vom Mischen der Polyisocyanatzusammensetzung A) mit dem Trimerisierungskatalysator C) bis zu dem Zeitpunkt, an dem die Viskosität der Reaktionsmischung bei 23 °C das Dreifache, stärker bevorzugt das Doppelte, des Ausgangswertes beträgt, zu sehr und der Prozess lässt sich nicht mehr praktikabel durchführen.

Beim erfindungsgemäßen Verfahren kommt der Trimerisierungskatalysator C) im Allgemeinen in einer auf die Menge der eingesetzten Polyisocyanatzusammensetzung A) bezogenen Konzentration von 0,04 bis 30,00 Gew.-%, bevorzugt von 0,10 bis 15,00 Gew.-% und besonders bevorzugt von 0,30 bis 10,00 Gew.-% und ganz besonders bevorzugt 0,50-5,00 Gew.-% zum Einsatz. Hierbei wird zur Konzentrationsberechnung als Trimerisierungskatalysator C) lediglich das Gemisch aus der mindestens einen basischen Verbindung der Alkali-oder Erdalkalimetalle und dem mindestens einen Katalysatorlösungsmittel bzw. Polyether betrachtet.

Die beim erfindungsgemäßen Verfahren zum Einsatz gelangenden Trimerisierungskatalysatoren C) sind in den Mengen, die zur Initiierung der Oligomerisierungsreaktion benötigt werden, in der Regel ausreichend in der Polyisocyanatzusammensetzung A) löslich bzw. dispergierbar. Die Zugabe des Trimerisierungskatalysators C) zur Polyisocyanatzusammensetzung A) erfolgt daher vorzugsweise in Substanz.

Zugabe des Trimerisierungskatalysators C) in Substanz bedeutet, dass das quaternäre Ammonium und/oder das Metallsalz bei Bedarf in einem geeigneten Katalysatorlösungsmittel, bevorzugt in dem Polyether, gelöst oder zumindest suspendiert vorliegt. Der Mengenanteil des quaternären Ammonium-, Alkalimetall- oder Erdalkalimetallsalzes in dieser Lösung kann für die Optimierung der Prozessbedingungen über einen großen Bereich frei gewählt werden, beträgt aber aus praktischen Gründen meist geringer 50 Gew.-%, bevorzugt geringer 25 Gew.-%, besonders bevorzugt geringer 20 Gew.-% bzw. geringer 15 Gew.-% und insbesondere geringer 10 Gew.-%. Der Mengenanteil ist aber in jedem Fall größer als 0,1 Gew.-%. Die vorgenannten Anteile beziehen sich auf das Gesamtgewicht an quaternärem Ammoniumsalz und/oder an Metallsalz und Katalysatorlösungsmittel bzw. Polyether.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Sofern beim erfindungsgemäßen Verfahren Katalysatorlösungsmittel zum Einsatz kommen, werden bevorzugt Katalysatorlösungsmittel, die gegenüber Isocyanaten reaktive Gruppen tragen und in den Polyurethankunststoff eingebaut werden können, verwendet. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylengylkolmonomethylether, Ethylenglykolmonoethylether, Ethylenglykolmonobutylether, Diethylengylkolmonomethylether, Diethylenglykolmonothylether, Diethylenglykolmono-butylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethyl-allylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

Als besonders vorteilhaft hat sich erwiesen, wenn das Metall- bzw. Ammoniumsalz und der Polyether nicht einzeln getrennt in das Polyisocyanat gegeben und dann erst vermischt werden, sondern wenn zunächst in einem ersten Schritt das Metall- bzw. Ammoniumsalz im Polyether gelöst und diese Lösung in einem zweiten Schritt der Polyisocyanatzusammensetzung A) zugegeben wird. Zudem wurde gefunden, dass sich die alkalischen Salze und insbesondere die alkalischen Kalium- und Natriumsalze besser in Polyethern basierend auf Ethylenoxid lösen verglichen mit Polyethern basierend auf Propylenoxid. Bevorzugt ist daher als die Zugabe einer Katalysatorlösung bestehend aus mindestens dem Metall- bzw Ammoniumsalz gelöst in Polyether zu der Polyisocyanatzusammensetzung A), besonders bevorzugt ist die Zugabe einer Katalysatorlösung bestehend aus einem alkalischen Metallsalz gelöst in Polyethylenglycol zu der Polyisocyanatzusammensetzung A) und am meisten bevorzugt ist die Zugabe einer Katalysatorlösung bestehend aus einem alkalischen Kaliumsalz gelöst in einem Polyethylenglycol (mittlere Molmasse zwischen 100 und 1000 g/mol) zu der Polyisocyanatzusammensetzung A).

Neben der Funktion als Lösemittel für das Metallsalz kann der Polyether auch gleichzeitig zur Aktivierung und Verstärkung der katalytischen Wirkung beitragen. Dies gilt insbesondere bei der Verwendung von Alkali- und Erdalkalimetallsalzen. Dieser Effekt wird bei vielen Polyethern beobachtet, ist aber für das erfindungsgemäße Verfahren bei der Verwendung von Polyethern auf Basis des Ethylenoxides am stärksten ausgeprägt. Dabei hat es sich als vorteilhaft erwiesen, wenn mehrere Ethylenoxideinheiten unmittelbar hintereinander polymerisiert vorliegen. Bevorzugt sind daher Polyether, die mindestens 3, bevorzugt mindestens 5 und am stärksten bevorzugt mindestens 7 Ethylenoxideinheiten hintereinander in der Polymerkette enthalten.

Das entsprechende Metallsalz kann im Prinzip bis zur Sättigung in dem Polyether vorliegen, da immer eine erhöhte Aktivierung zumindest eines Teils des Metallsalzes durch den Polyether erfolgt. Die untere Grenze der Metallsalzkonzentration ergibt sich aus praktischen Gründen durch die Verdünnung der Polyisocyanatmischung mit Polyether, wenn die Metallkonzentration im Ether zu gering ist. Bevorzugt ist daher eine Metallionenkonzentration des katalytischen Metallsalzes im Polyether zwischen 0,01 Gew.-% und 50 Gew.-%, bevorzugt zwischen 0,1 Gew.-% und 25 Gew.-%, besonders bevorzugt zwischen 0,5 Gew.-% und 15 Gew.-% und insbesondere zwischen 1 Gew.-% und 10 Gew.-%.

Gemäß einer besonders bevorzugten Ausführungsform des erfindungsgemäßen Verfahrens weist der Katalysator einen Polyether mit mindestens 5 aufeinanderfolgenden Ethylenoxideinheiten im Molekül, in dem ein alkalisches Kalium-, Lithium- oder Natriumsalz mit einer Metallionenkonzentration zwischen 0,01 Gew.-% und 50 Gew.-%, bevorzugt zwischen 0,1 Gew.-% und 25 Gew.-%, besonders bevorzugt zwischen 0,5 Gew.-% und 15 Gew.-% und insbesondere zwischen 1 Gew.-% und 10 Gew.-% gelöst ist, auf. Am stärksten bevorzugt ist ein Polyether mit mindestens 7 aufeinander folgenden Ethylenoxideinheiten im Molekül, in dem ein alkalisches Kaliumsalz mit einer Kaliumionenkonzentration zwischen 0,5 Gew.-% und 15 Gew.-% gelöst ist. Bei allen vorgenannten Ausführungsformen ist bevorzugt, dass eine Anzahl von 10 aufeinander folgenden Ethylenoxideinheiten nicht überschritten wird.

Da die Isocyanuratbildung in Abhängigkeit vom verwendeten Katalysator häufig von Nebenreaktionen, beispielsweise der Dimerisierung zu Uretdionstrukturen oder der Trimerisierung unter Bildung von Iminoxadiazindionen (sogenannten asymmetrischen Trimerisaten) und bei Vorhandensein von Urethangruppen im Ausgangspolyisocyanat von Allophanatisierungsreaktionen, begleitet wird, soll im Rahmen der vorliegenden Erfindung der Begriff "Trimerisierung" synonym auch für diese zusätzlich ablaufenden Reaktionen stehen.

Gemäß einer besonderen Ausführungsform bedeutet Trimerisierung jedoch, dass vorwiegend Cyclotrimerisierungen von mindestens 50 %, vorzugsweise mindestens 60 %, besonders bevorzugt mindestens 70 %, insbesondere mindestens 80 % und ganz besonders bevorzugt 90 % der in der Polyisocyanatzusammensetzung A) vorliegenden Isocyanatgruppen, zu Isocyanurat Struktureinheiten katalysiert werden. Nebenreaktionen, insbesondere solche zu Uretdion-, Allophanat-, und/oder Iminooxadiazindionstrukturen treten jedoch üblicherweise auf und können sogar gezielt genutzt werden, um z.B. die Glasübergangstemperatur (Tg) des erhaltenen Polyisocyanuratkunststoffs vorteilhaft zu beeinflussen.

Das Aushärten der Polyisocyanatzusammensetzung A führt in einer besonders bevorzugten Ausführungsform der vorliegenden Erfindung dazu, dass sich die in Uretdion-, Isocyanurat-, und Iminooxadiazindionstrukturen gebundenen Stickstoffanteile bevorzugt auf mindestens 60 %, stärker bevorzugt auf mindestens 65 %, insbesondere bevorzugt auf mindestens 70 %, 75 % , 80 %, 85 %, 90 % und am stärksten bevorzugt auf mindestens 95 % des Gesamtstickstoffgehaltes der Polyisocyanatzusammensetzung A summieren. Hierbei ist zu berücksichtigen, dass erfindungsgemäß nur eine der vorgenannten Strukturen anwesend sein muss und abhängig von der Art des gewählten Vernetzungskatalysators eine oder mehrere der vorgenannten Strukturen auch vollständig fehlen können. Ganz besonders bevorzugt ist wenigstens die Isocyanuratstruktur anwesend.

Die nach dem erfindungsgemäßen Verfahren erhältlichen Polyisocyanurat-Kompositwerkstoffe zeichnen sich bereits als solche, d. h. ohne Zusatz entsprechender Hilfs-und Zusatzmittel D), durch eine sehr gute Lichtbeständigkeit bzw. Witterungsbeständigkeit aus. Dennoch können bei ihrer Herstellung gegebenenfalls übliche Hilfs- und Zusatzmittel D), wie beispielsweise übliche Füllstoffe, UV-Stabilisatoren, Antioxidantien, Formtrennmittel, Wasserfänger, Slipadditive, Entschäumer, Verlaufsmittel, Rheologieadditive, Flammschutzmittel und/oder Pigmente, mitverwendet werden. Diese Hilfs- und Zusatzmittel D), ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf die Polyisocyanatzusammensetzung A), im Polyisocyanurat-Kompositwerkstoff vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht der Polyisocyanatzusammensetzung A), im Polyisocyanurat-Kompositwerkstoff vor.

Geeignete Füllstoffe D_{w}) sind beispielsweise AlOH₃, CaCOs, Siliziumdioxid, Magnesiumcarbonat, Mineralien enthaltend Silikate, Sulfate, Carbonate und Ähnliches. wie Magnesit, Baryt, Glimmer, Dolomit, Kaolin, Tonmineralien, Metallpigmente wie TiO₂ und weitere bekannte übliche Füllstoffe. Diese Füllstoffe D_{w}) werden vorzugsweise in Mengen von höchstens 80 Gew.-%, bevorzugt höchstens 60 Gew.-%, besonders bevorzugt höchstens 40 Gew.-%, ganz besonders bevorzugt höchstens 30 Gew.-%, insbesondere höchstens 20, 10, 5 Gew.-%, berechnet als Gesamtmenge an eingesetzten Füllstoffen bezogen auf das Gesamtgewicht der Polyisocyanatzusammensetzung A), eingesetzt.

Geeignete UV-Stabilisatoren Dₓ) können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxy-benzylidenmalonsäuredimethylester, 4-Methoxybenzylidenmalonsäurediethylester, 4-Butoxy-benzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren Dₓ) für die erfindungsgemäß herstellbaren Polyisocyanurat-Kompositwerkstoffe sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren Dₓ) der Polyisocyanatzusammensetzung A) vorzugsweise in Mengen von 0,001 bis 3,0 Gew.-%, besonders bevorzugt 0,01 bis 2 Gew.-%, berechnet als Gesamtmenge an eingesetzten UV-Stabilisatoren bezogen auf das Gesamtgewicht der Polyisocyanatzusammensetzung A) zugesetzt.

Geeignete Antioxidantien D_{y}) sind vorzugsweise sterisch gehinderten Phenole, welche vorzugsweise ausgewählt werden können aus der Gruppe, bestehend aus Vitamin E, 2,6-Di-tert-butyl-4-methylphenol (lonol) und Derivaten davon, Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-di-tert-butyl-4-hydroxyphenyl)propionat]. Diese können bei Bedarf sowohl einzeln als auch in beliebigen Kombinationen untereinander eingesetzt werden.

Diese Antioxidantien D_{y}) werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht der Polyisocyanatzusammensetzung A) eingesetzt.

Das erfindungsgemäße Verfahren kann, abgesehen von den geringen Mengen gegebenenfalls mitzuverwendender Katalysatorlösungsmittel, lösungsmittelfrei durchgeführt werden.

Als weitere Hilfs- und Zusatzmittel D) können schließlich auch interne Formtrennmittel D_{z}) zugesetzt werden.

Bei diesen handelt es sich vorzugsweise um die als Formtrennmittel bekannten Perfluoralkyl- oder Polysiloxaneinheiten enthaltenden nichtionischen Tenside, quartäre Alkylammoniumsalze, wie z.B. Trimethylethylammoniumchlorid, Trimethylstearyl-ammoniumchlorid, Dimethylethylcetylammoniumchlorid, Triethyldodecylammoniumchlorid, Trioctylmethylammoniumchlorid und Diethylcyclohexyldodecylammoniumchlorid, saure Mono- und Dialkylphosphate sowie Trialkylphosphate mit 2 bis 18 Kohlenstoffatomen im Alkylrest, wie z.B. Ethylphosphat, Diethylphosphat, Isopropylphosphat, Diisopropylphosphat, Butylphosphat, Dibutylphosphat, Octylphosphat, Dioctylphosphat, Isodecylphosphat, Diisodecylphosphat, Dodecylphosphat, Didodecylphosphat, Tridecanolphosphat, Bis(tridecanol)-phosphat, Stearylphospat, Distearylphosphat, Wachse, wie Bienenwachs, Montanwachs oder Polyethylenoligomere, Metallsalze und Ester von Öl- und Fettsäuren wie Bariumstearat, Calciumstearat, Zinkstearat, Glycerinstearat und- laurat, Ester von aliphatischen verzweigten und unverzweigten Alkoholen mit 4 bis 36 Kohlenstoffatomen im Alkylrest und beliebige Gemische solcher Formtrennmittel.

Besonders bevorzugte Formtrennmittel D_{z}) sind die genannten Fettsäureester und deren -salze sowie saure Mono- und Dialkylphosphate, ganz besonders bevorzugt solche mit 8 bis 36 Kohlenstoffatomen im Alkylrest.

Interne Formtrennmittel D_{z}) werden beim erfindungsgemäßen Verfahren gegebenenfalls vorzugsweise in Mengen von 0,01 bis 15,0 Gew.-%, besonders bevorzugt 0,02 bis 10,0 Gew.-%, insbesondere 0,02 bis 5,0 Gew.-%, berechnet als Gesamtmenge an eingesetztem internen Formtrennmittel bezogen auf das Gesamtgewicht der Polyisocyanatzusammensetzung A) eingesetzt.

Gemäß einer Ausführungsform des erfindungsgemäßen Verfahrens wird der beschriebenen Polyisocyanatzusammensetzung A), gegebenenfalls unter Inertgas, wie z.B. Stickstoff, und gegebenenfalls unter Mitverwendung der vorstehend genannten Lösungsmittel sowie Hilfs- und Zusatzmittel D), ein Trimerisierungskatalysator C) oder ein Gemisch unterschiedlicher Trimerisierungskatalysatoren C) zugesetzt und mit Hilfe eines geeigneten Mischaggregats homogen eingemischt und zu dem faserförmigen Füllstoff B) gegeben. Die Zugabe von Katalysator C) und dem gegebenenfalls mitzuverwendenden Lösungsmittel sowie Hilfs- und Zusatzmitteln D) kann dabei in beliebiger Reihenfolge nacheinander oder im Gemisch in den oben angegebenen Mengen und in der Regel bei einer Temperatur von 0 bis 100 °C, vorzugsweise von 15 bis 80 °C, besonders bevorzugt von 20 bis 60 °C, statt. Es ist ebenso denkbar, dass zuerst das Gemisch aus Polyisocyanatzusammensetzung A), gegebenenfalls unter Inertgas, wie z.B. Stickstoff, und gegebenenfalls unter Mitverwendung der vorstehend genannten Lösungsmittel sowie Hilfs- und Zusatzmittel D), ein Trimerisierungskatalysator C) oder ein Gemisch unterschiedlicher Trimerisierungskatalysatoren C) vorgelegt wird und dann die Zugabe des faserförmigen Füllstoffs B) erfolgt. Gemäß einer besonderen Ausführungsform der Erfindung hat die so erhaltene Reaktionsmischung eine Topfzeit, wie oben definiert, von größer 10 Minuten, bevorzugt größer 30 Minuten, besonders bevorzugt größer 60 Minuten, insbesondere größer 120 Minuten. Dadurch wird sowohl eine sichere Mischbarkeit als auch eine sichere und einfache Verarbeitung und gute Benetzung der Faser in nahezu allen Komposit-Herstellprozessen ohne das Risiko einer vorzeitig unkontrolliert ablaufenden Reaktion sichergestellt.

Gemäß einer bevorzugten Ausführungsform der Erfindung werden zumindest die Polyisocyanatzusammensetzung A), besonders bevorzugt auch die Mischung aus faserförmigem Füllstoff B), Katalysator C) und Polyisocyanatzusammensetzung A), vor der Reaktion nach üblichen Verfahren entgast. Bevorzugt wird die erfindungsgemäße Polyisocyanatzusammensetzung A) und/oder auch die Mischung aus faserförmigem Füllstoff B), Katalysator C) und Polyisocyanatzusammensetzung A) vor der Reaktion sorgfältig bei Temperaturen zwischen 10 und 100 °C entgast.

Zur Herstellung massiver Körper, wie z.B. Bauteile, können Reaktionsgemische, die den Katalysator C) und die Polyisocyanatzusammensetzung A) enthalten, beispielsweise durch einfaches Vergießen von Hand, oder mit Hilfe geeigneter Maschinen, wie z.B. den in der Polyurethantechnologie üblichen Niederdruck- oder Hochdruckmaschinen in offene oder geschlossene Formen gefüllt werden, die bereits einen faserförmigen Füllstoff B) enthalten. Der faserförmige Füllstoff B) kann aber auch nach Einfüllen des Reaktionsgemischs aus Katalysator C) und Polyisocyanatzusammensetzung A) in die Form hinzugegeben werden. Es kann aber auch zunächst der faserförmige Füllstoff B) und das Reaktionsgemisch aus Katalysator C) und Polyisocyanatzusammensetzung A) vermischt und diese Mischung in eine Form gefüllt werden.

Die Trimerisierungsreaktion kann durch Erwärmen gestartet werden. Die optimale Form bzw. Umgebungstemperatur in Abhängigkeit vom jeweils gewählten Katalysator C) beträgt 80 bis 250 °C, vorzugsweise von 100 bis 230 °C, besonders bevorzugt von 150 bis 200 °C. Besonders vorteilhaft kann die Trimerisierung bei Temperaturen oberhalb des Glaspunktes der gewünschten Produkte durchgeführt werden. Gemäß einer besonderen Ausführungsform der Erfindung erreicht die Temperatur der Reaktionsmischung im Laufe der Reaktion mehr als 80 °C bleibt aber auch lokal unter 400 °C, bevorzugt unter 300 °C besonders bevorzugt unter 250 °C.

Abhängig vom gewählten Trimerisierungskatalysator C), der Polyisocyanatzusammensetzung A) und der gewählten Umgebungstemperatur ist die Trimerisierungsreaktion nach einem Zeitraum von einigen Sekunden bis zu wenigen Minuten weitestgehend abgeschlossen, wie unten definiert. In der Praxis hat sich gezeigt, dass die Trimerisierungsreaktion bei Umgebungstemperaturen von größer 150 °C üblicherweise in weniger als 30 Minuten weitestgehend abgeschlossen ist. Gemäß einer Ausführungsform ist die katalytische Trimerisierung bei einer Temperatur von größer 150 °C innerhalb von weniger als 10 Minuten, insbesondere weniger als 5 Minuten, weitestgehend abgeschlossen, wie unten definiert.

Wenn an anderer Stelle in dieser Anmeldung von "Reaktionstemperatur" die Rede ist, so ist damit die Umgebungstemperatur gemeint. Nach einer bevorzugten Ausführungsform der Erfindung ist die Trimerisierungsreaktion bei einer Umgebungstemperatur von größer 80 °C, bevorzugt 100 °C, insbesondere größer 120 °C, bevorzugt größer 150 °C, besonders bevorzugt größer 170 °C in weniger als 10 Minuten, besonders bevorzugt weniger als 5 Minuten, ganz besonders bevorzugt weniger als 3 Minuten, vorzugsweise weniger als1 Minute, insbesondere weniger als 45 Sekunden, weitestgehend abgeschlossen. Nach einer weiteren bevorzugten Ausführungsform der Erfindung ist die Trimerisierungsreaktion bei einer Umgebungstemperatur von geringer 250 °C, insbesondere geringer 230 °C, bevorzugt geringer 200 °C, besonders bevorzugt geringer 190°C in weniger als 5 Minuten, besonders bevorzugt weniger als 3 Minuten, insbesondere weniger als 1 Minute, ganz besonders bevorzugt weniger als 45 Sekunden, weitestgehend abgeschlossen.

Diese Reaktionsgeschwindigkeiten werden bevorzugt erreicht, indem Salze von Alkali- oder Erdalkalimetallen in Kombination mit Polyethern verwendet werden.

Als "weitestgehend abgeschlossen" kann im Sinne der vorliegenden Erfindung eine Trimerisierungsreaktion zu Polyisocyanuratstrukturen angesehen werden, wenn mindestens 80 %, vorzugsweise mindestens 90 %, besonders bevorzugt mindestens 95 % und insbesondere mindestens 98 %, ganz besonders bevorzugt 99 % der ursprünglich in der Polyisocyanatzusammensetzung A) vorhandenen freien Isocyanatgruppen abreagiert haben. Anders ausgedrückt sind in dem nach dem erfindungsgemäßen Verfahren erhaltenen Polyisocyanurat-Kompositwerkstoff vorzugsweise nur noch höchstens 20 %, höchstens 10 %, besonders bevorzugt höchstens 5 %, insbesondere höchstens 2 %, ganz besonders bevorzugt höchstens 1 % der ursprünglich in der Polyisocyanatzusammensetzung A) enthaltenen Isocyanatgruppen vorhanden.

Der Verlauf der Reaktion kann anfangs noch durch titrimetrische Bestimmung des NCO-Gehaltes bestimmt werden, bei fortschreitender Umsetzung setzt aber rasch eine Gelierung und Verfestigung des Reaktionsgemisches ein, was nasschemische Analysenverfahren unmöglich macht. Der weitere Umsatz der Isocyanatgruppen kann dann nur noch durch spektroskopische Methoden, beispielsweise durch IR-Spektroskopie anhand der Intensität der Isocyanatbande bei ca. 2270 cm⁻¹ verfolgt werden.

Gegenstand der Erfindung ist auch der durch das erfindungsgemäße Verfahren erhältliche Polyisocyanurat-Kompositwerkstoff. Bei dem durch das erfindungsgemäße Verfahren erhältlichen Polyisocyanurat-Kompositwerkstoff handelt es sich vorzugsweise um einen solchen, der als polymeres Matrixmaterial hochumgesetzte Polyisocyanurate, d.h. solche bei denen die Trimerisierungsreaktion zu Polyisocyanuratstrukturen weitestgehend abgeschlossen ist, aufweist. Als "weitestgehend abgeschlossen" kann im Sinne der vorliegenden Erfindung eine Trimerisierungsreaktion zu Polyisocyanuratstrukturen angesehen werden, wenn mindestens 80 %, vorzugsweise mindestens 90 %, besonders bevorzugt mindestens 95 % und insbesondere mindestens 98 %, ganz besonders bevorzugt 99 % der ursprünglich in der Polyisocyanatzusammensetzung A) vorhandenen freien Isocyanatgruppen abreagiert haben. Anders ausgedrückt sind in dem nach dem erfindungsgemäßen Verfahren erhaltenen Polyisocyanurat-Kompositwerkstoff vorzugsweise nur noch höchstens 20 %, höchstens 10 %, besonders bevorzugt höchstens 5 %, insbesondere höchstens 2 %, ganz besonders bevorzugt höchstens 1 % der ursprünglich in der Polyisocyanatzusammensetzung A) enthaltenen Isocyanatgruppen vorhanden. Dies kann dadurch erreicht werden, dass im erfindungsgemäßen Verfahren die katalytische Trimerisierung mindestens bis zu einem Umsetzungsgrad durchgeführt wird, bei dem nur noch z.B. höchstens 20 % der ursprünglich in der Polyisocyanatzusammensetzung A) enthaltenen Isocyanatgruppen vorhanden sind, so dass ein hochumgesetztes Polyisocyanurat erhalten wird. Der Prozentsatz an noch vorhandenen Isocyanat-Gruppen kann durch einen Vergleich des Gehalts an Isocyanat-Gruppen in Gew.-% in der ursprünglichen Polyisocyanatzusammensetzung A) mit dem Gehalt an Isocyanat-Gruppen in Gew.-% im Reaktionsprodukt, beispielsweise durch vorgenannten Vergleich der Intensität der Isocyanatbande bei ca. 2270 cm⁻¹ mittels IR-Spektroskopie, bestimmt werden.

Gemäß einer bevorzugten Ausführungsform beträgt der Gesamtgehalt an extrahierbaren isocyanathaltigen Verbindungen am erfindungsgemäßen Polyisocyanurat-Kompositwerkstoff bezogen auf die eingesetzten Polyisocyanatzusammensetzung A) weniger als 1 Gew.-%. Der Gesamtgehalt an extrahierbaren isocyanathaltigen Verbindungen kann besonders praxisgerecht nach an sich bekannten Verfahren vorzugsweise durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan, Cyclohexan, Toluol oder Xylol und anschließender Bestimmung des Isocyanatgruppenanteils im Extrakt, beispielsweise durch IR-Spektroskopie, erfolgen.

Gemäß einer anderen bevorzugten Ausführungsform weisen die erfindungsgemäßen nichtadditivierten Polyisocyanurat-Kompositwerkstoffe einen b*-Wert bestimmt entsprechend DIN 5033 im L*a*b*-Farbraum von geringer 15, vorzugsweise geringer 9, besonders bevorzugt geringer 8 und insbesondere geringer 7 auf. "Nicht additiviert" bedeutet in diesem Zusammenhang, dass der Polyisocyanurat-Kompositwerkstoff keine Pigmente enthält, beziehungsweise nicht durch Zugabe von Pigmenten eingefärbt wurde. Jede Farbe im L*a*b*-Farbraum ist durch einen Farbort mit den kartesischen Koordinaten {L*, a*, b*} definiert. Die L*-Achse beschreibt die Helligkeit (Luminanz) der Farbe mit Werten von 0 bis 100. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Höhere positive b*-Werte indizieren daher eine starke Vergilbung die für viele Anwendungen ungewünscht ist.

Gemäß einer weiteren bevorzugten Ausführungsform weisen die erfindungsgemäßen Polyisocyanurat-Kompositwerkstoffe einen mindestens 5 %, bevorzugt 10 %, besonders bevorzugt 15 % und insbesondere 25 % kleineren b*-Wert auf im Vergleich zu Proben, die unter gleichen Bedingungen mit gleicher Materialzusammensetzung aber ohne faserförmigem Füllstoff B) hergestellt wurden.

Gemäß einer weiteren bevorzugten Ausführungsform weisen die erfindungsgemäßen Polyisocyanurat-Kompositwerkstoffe einen b*-Wert auf, der mindestens 0,5, bevorzugt 2 , besonders bevorzugt 4 und insbesondere 8 Einheiten kleiner ist im Vergleich zu Proben, die unter gleichen Bedingungen mit gleicher Materialzusammensetzung aber ohne Fasern hergestellt wurden.

Mit dem erfindungsgemäßen Verfahren lassen sich sehr effizient homogene, blasenfreie Polyisocyanurat-Kompositwerkstoffe erhalten. Die Blasenfreiheit eines Polyisocyanurat-Kompositwerkstoffs kann über die Dichte spezifiziert werden. Dabei wird zunächst die mittlere Dichte des Polyisocyanurat-Kompositwerkstoffes bestimmt. Dann wird die Dichte des Fasermaterials bestimmt (soweit nicht ohnehin bekannt). Mit den beiden Werten kann nun auch die Dichte des Matrixmaterials berechnet werden. Die erfindungsgemäßen Polyisocyanurat-Kompositwerkstoffe zeichnen sich insbesondere durch eine Dichte der Polyisocyanurat-Harzmatrix von größer 1,00 g/cm³ bestimmt nach DIN EN ISO 1183-1 aus.

Das erfindungsgemäße Verfahren liefert insbesondere Polyisocyanurat-Kompositwerkstoffe mit einer mittleren Dichte von größer 1,30 g/cm³, bevorzugt größer 1,5 g/cm³ und besonders bevorzugt größer 1,7 g/cm³.

Die durch das erfindungsgemäße Verfahren erhältlichen Polyisocyanurat-Kompositwerkstoffe, enthalten je nach Art der eingesetzten Polyisocyanatzusammensetzung A) neben Isocyanuratstrukturen gegebenenfalls weitere oligomere Strukturen und zeichnen sich durch hervorragende Wärme- und Witterungsbeständigkeiten aus.

Die Witterungsbeständigkeit kann zum Beispiel mit Hilfe von beschleunigten Bewitterungstests durchgeführt werden. Dabei wird die Probe entsprechend der gewählten Norm definierten Mengen und Zeiten an UVA und UVB Strahlung, Wärme und Feuchtigkeit ausgesetzt.

Das erfindungsgemäße Verfahren liefert insbesondere Polyisocyanurat-Kompositwerkstoffe, die bei einer Bewitterung mit einem Ci 5000 oder Ci 4000 Gerät der Firma Atlas Material Testing Technology nach der Norm SAE J 2527 keine wesentlichen Veränderungen an der Probe nach 500 h, bevorzugt nach 1000 h, besonders bevorzugt nach 2000 h und insbesondere nach 4000 h zeigt. Beispielsweise vergrößert sich der oben beschriebene b*- Wert der Farbskala um maximal 20, bevorzugt um maximal 15, besonders bevorzugt um maximal 10 und insbesondere um maximal 5 Einheiten nach 1000 h Test entsprechend SAE J 2527.

Bevorzugt beträgt die Menge an Stickstoff in der Polyisocyanuratkunststoff-Matrix des fertigen Polyisocyanurat-Kompositwerkstoffs mindestens 9 Gew.-%, besonders bevorzugt mindestens 13 Gew.-%, ganz besonders bevorzugt 15 Gew.-% bezogen auf das Gesamtgewicht der Polyisocyanuratkunststoff-Matrix im Polyisocyanurat-Kompositwerkstoff. Die Menge an Stickstoff kann im fertigen Polyisocyanuratkunststoff mittels Elementaranalyse, z.B. durch Verwendung eines vario EL cube Gerätes der Firma elementar Americas INC., bestimmt werden.

In Ausführungsformen, in denen Metallsalze als Katalysator eingesetzt werden beträgt der Gewichtsanteil des Metalls bzw. der Metallionen im Polyisocyanurat-Kompositwerkstoff mindestens 0,00025 Gew.-%, besonders bevorzugt mindestens 0,001 Gew.-% und ganz besonders bevorzugt mindestens 0,01 Gew.-% bezogen auf die Polyisocyanatzusammensetzung A). Der Gewichtsanteil an Metallionen kann im fertigen Polyisocyanurat-Werkstoff durch Atomabsorptionsspektroskopie oder Atomemissionsspektroskopie bestimmt werden. Bevorzugt beträgt in solchen Ausführungsformen der Gewichtsanteil von Kalium- und Natriumionen, insbesondere Kaliumionen, im Polyisocyanurat-Kompositwerkstoff 0,00025 bis 3 Gew.-%, bevorzugt von 0,001 bis 1 Gew.-% und besonders bevorzugt von 0,01 bis 0,5 Gew.-% bezogen auf den Polyisocyanurat-Kompositwerkstoff.

In Ausführungsformen, in denen Metallsalze als Katalysator eingesetzt werden beträgt der Gewichtsanteil des Metalls bzw. der Metallionen im Polyisocyanurat-Kunststoff bzw. in der Polyisocyanuratzusammensetzung A mindestens 0,0008 Gew.-%, besonders bevorzugt mindestens 0,003 Gew.-% und ganz besonders bevorzugt mindestens 0,03 Gew.-% bezogen auf die Polyisocyanatzusammensetzung A). Der Gewichtsanteil an Metallionen kann im fertigen Polyisocyanurat-Werkstoff durch Atomabsorptionsspektroskopie oder Atomemissionsspektroskopie bestimmt werden. Bevorzugt beträgt in solchen Ausführungsformen der Gewichtsanteil von Kalium- und Natriumionen, insbesondere Kaliumionen, im Polyisocyanurat-Kompositwerkstoff 0,0008 bis 3 Gew.-%, bevorzugt von 0,003 bis 1 Gew.-% und besonders bevorzugt von 0,03 bis 0,5 Gew.-% bezogen auf die Polyisocyanatzusammensetzung A).

Das erfindungsgemäße Verfahren ermöglicht es auf einfache Weise, durch geeignete Auswahl von Ausgangspolyisocyanaten bei hohen Temperaturen und kurzen Reaktionszeiten effizient witterungsbeständige blasenfreie Polyisocyanurat-Kompositwerkstoffe herzustellen.

Im Gegensatz zu Polyisocyanurat-Kompositwerkstoffen, die nach Verfahren aus dem Stand der Technik hergestellt wurden, zeichnen sich die erfindungsgemäßen Verfahrensprodukte, durch abweichende chemische und physikalische Eigenschaften aus. Die im Vergleich zu Polyisocyanurat-Kompositwerkstoffen des Standes der Technik unterschiedlichen physikalischen Eigenschaften (z.B. Dichte, Farbzahl) könnten auf eine durch die erfindungsgemäße Verfahrensführung abweichende neuartige Netzwerkstruktur im Polyisocyanurat-Kompositwerkstoff zurückzuführen sein. Die im Vergleich zu Polyisocyanurat-Kompositwerkstoffen unterschiedlichen chemischen Eigenschaften (Mindestkonzentration von Metallionen und/oder Mindestkonzentration an Stickstoff in der Polyisocyanuratmatrix), können auf den Verbleib des Alkali- oder Erdalkalimetallsalz-Katalysators im Produkt bzw. auf den Isoycanuratgruppenanteil im fertigen Polyisocyanurat-Werkstoff zurückzuführen sein.

Im Vergleich zu Polyisocyanuratkunststoffen, die mit üblichen Verfahren hergestellt wurden, zeichnen sich die erfindungsgemäßen Verfahrensprodukte dadurch aus, dass die Gegenwart des faserförmigen Füllstoffs B) auch die problemlose Herstellung massiver großvolumiger Bauteile ohne extreme lokale Überhitzungen, die üblicherweise zu Inhomogenitäten und Nebenreaktionen, und damit zu Verfärbung und Blasen, führen, ausgehend von preiswerten monomeren Polyisocyanaten in kurzen, effizienten Prozessen, gestattet.

Gegenstand der Erfindung ist ferner die Verwendung des Polyisocyanurat-Kompositwerkstoffs zur Herstellung von Bauteilen sowie Bauteile, enthaltend den erfindungsgemäßen Polyisocyanurat-Kompositwerkstoff.

Wenn hier von "Bauteilen" die Rede ist, sind damit insbesondere strukturelle Bauteile, wie beispielsweise Profile, Träger, Verstärkungsstreben und verstärkte Leichtbauteile, wie beispielsweise Sportartikel (Pfeile, Bogen, Ski, Schläger etc.), Kanaldeckel, Platten, Gehäuse, Kofferraum- oder Motorraumabdeckungen, Blattfedern, Stoßstangen, Blenden, Schürzen sowie Rohre, Druckbehälter und Tanks gemeint.

Die mit dem Polyisocyanurat-Kompositwerkstoff hergestellten Bauteile benötigen für viele Anwendungen keinen extra Lackierungsschritt. Helle Farben wie weiß oder gelb können direkt durch Zugabe von Pigmenten in die reaktive Harzlösung ohne Verfärbungen erhalten werden, die hohe UV- und Bewitterungsfestigkeit der Bauteile macht eine Schutzlackierung, beispielsweise bei Außenanwendungen, unnötig. Dadurch werden Kosten gespart. Zudem entfallen Reparaturarbeiten, die bei Beschädigung und Abblättern einer solchen Schutzschicht durch äußere Einflüsse notwendig sind, um einerseits das damit verbundene unästhetische Erscheinungsbild und andererseits den Witterungsangriff auf den Untergrund zu verhindern. Dies spart zusätzlich Kosten im Lebenszyklus des Bauteiles und trägt zur ökologischen Nachhaltigkeit des Einsatzes solcher Bauteile bei.

Die Erfindung wird im Folgenden anhand von Beispielen näher erläutert.

### Allgemeine Angaben:

Alle Prozentangaben beziehen sich, sofern nicht abweichend angegeben, auf Gewichtsprozent (Gew.-%).

Die zur Zeit der Versuchsdurchführung herrschende Umgebungstemperatur von 25 °C wird als RT (Raumtemperatur) bezeichnet.

Die NCO- Funktionalität der verschiedenen Rohstoffe wurde jeweils rechnerisch ermittelt oder aus dem jeweiligen Datenblatt des Rohstoffs entnommen.

### Messmethoden:

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

### Bestimmung der Vergilbung mittels Cie-Lab Messung

Der Kompositwerkstoff wurde nach Vernetzung und Abkühlung aus der Form gelöst und die Messung an der unteren, glatten Fläche des Werkstoffes durchgeführt. Dafür wurde ein Farbmeßgerät der Fa. BYK-Gardner GmbH, Typ color-guide sphere spin mit Skala CIE L*a*b*-System, Messgeometrie d/8° und Lichtart/Beobachter D65/10° verwendet. Der verwendete Wert entspricht dem arithmetischen Mittel von 5 Messungen.

### Bestimmung des Tg Wertes mittels DSC

Die Glasübergangstemperatur T_{g} wurde mittels DSC (Differential Scanning Calorimetrie) mit einem Mettler DSC 12E (Mettler Toledo GmbH, Gießen, DE) entsprechend DIN EN 61006 bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 320 K/min. Die Kühlung erfolgte durch flüssigen Stickstoff. Als Spülgas wurde Stickstoff verwendet. Die in der untenstehenden Tabelle angegebenen Werte basieren jeweils auf der Auswertung der 1. Aufheizkurve, da bei den untersuchten Reaktivsystemen durch die Temperaturbelastung in der DSC Veränderungen der Probe im Messprozess bei hohen Temperaturen möglich sind. Als Glasübergangstemperatur T_{g} wurde die Temperatur bei der halben Höhe einer Glasübergangsstufe bestimmt.

### Bestimmung der Witterungsbeständigkeit

Die Bewitterungstests wurden in einem Ci5000 der Firma Atlas Material Testing Technology durchgeführt. Die Proben wurden mit der glatten Seite Richtung Xenonlampe in das Gerät gestellt und die Zyklen entsprechend der Norm SAE J 2527 gefahren. Nach bestimmten Intervallen wurden Sichtprüfungen auf Risse, Oberflächenglanz und Glätte, Erscheinungsbild und Farbveränderung durchgeführt. Zum Vergleich wurde jeweils eine zweite Probe mit hergestellt, aber nicht bewittert sondern im Dunkeln bei Raumtemperatur und 40 bis 70 % relativer Luftfeuchte gelagert, und als Referenz benutzt.

### Bestimmung der Topfzeit

Die Viskosität einer kleinen Menge des reaktiven Harzmaterials einschließlich des zugegebenen Katalysators wurde bei 23 °C mit einem Physica MCR 51 der Firma Anton Paar (Platte/ Platte; Scherrate 1s⁻¹) gemessen. Die Topfzeit war die Zeit, in der sich die Viskosität der Probe verdoppelt hat.

### Experimentelle Bestimmung des Stickstoffgehaltes der Kunststoffmatrix im fertigen Polyisocyanurat-Kompositwerkstoff

Es werden einige Milligramm der Kunststoffmatrix vorsichtig von dem Polyisocyanurat-Kompositwerkstoff abgeschabt. Ein Teil davon wird unter Luftatmosphäre in der TGA verbrannt (1000 °C) und der nicht brennbare Feststoffanteil (Faser, anorganische Füllstoffe) als Rückstand bestimmt. Nun wird mit einem weiteren Teil der Probe in einem vario EL Cube der Firma elementar Americas INC. der Stickstoffgehalt bestimmt. Aus der Differenzbestimmung lässt sich der Gehalt an Stickstoff in der Matrix errechnen.

### Rechnerische Bestimmung des Stickstoffgehaltes der Kunststoffmatrix im fertigen Polyisocyanurat-Kompositwerkstoff

Es wird der Stickstoffgehalt als Summe aller in der Kunststoffmatrix vorhandenen Stickstoffatome aus organischen Materialien, d.h. aus Isocyanatgruppen, organischen Additiven mit Aminogruppen, aromatischen Heterocyclen mit Stickstofffunktionalitäten usw., geteilt durch die Gesamtmenge an organischen Komponenten multipliziert mit 100 % ermittelt.

### Einsatzstoffe

Desmodur N 3600 ist ein HDI-Trimerisat (NCO-Funktionalität >3) mit einem NCO-Gehalt von 23,0 Gew.-% von der Fa. Covestro AG. Die Viskosität beträgt ca. 1200 mPas bei 23°C (DIN EN ISO 3219/A.3).
Desmodur N 3300 ist ein HDI-Trimerisat (NCO-Funktionalität >3) mit einem NCO-Gehalt von 21,8 Gew.-% von der Fa. Covestro AG. Die Viskosität beträgt ca. 3000 mPas bei 23 °C (DIN EN ISO 3219/A.3).
Desmodur T 100 ist ein aromatisches TDI-Monomer mit einem NCO-Gehalt von ≥ 48 Gew.-% von der Fa. Covestro AG. Die Viskosität beträgt ca. 3 mPas bei 25 °C (DIN 53015).
Desmodur VL 50 ist ein aromatisches MDI basiertes Polyisocyanat mit einem NCO-Gehalt von ca. 32,5 Gew.-% von der Fa. Covestro AG. Die Viskosität beträgt ca. 22,5 mPas bei 25 °C (MDI-01-02).
Desmodur H ist ein HDI-Monomer (NCO-Funktionalität 2) mit einem NCO-Gehalt von 49,7 Gew.-% von der Fa. Covestro AG. Die Viskosität beträgt ca. 3 mPas bei 23 °C (DIN EN ISO 3219/A.3).
Desmodur I ist ein IPDI-Monomer (NCO-Funktionalität 2) mit einem NCO-Gehalt von 37,5 Gew.-% von der Fa. Covestro AG. Die Viskosität beträgt ca. 10 mPas bei 23 °C (DIN EN ISO 3219/A.3).
Desmodur W ist ein H12MDI-Monomer (NCO-Funktionalität 2) mit einem NCO-Gehalt von 31,8 Gew.-% von der Fa. Covestro AG. Die Viskosität beträgt ca. 30 mPas bei 23 °C (DIN EN ISO 3219/A.3).
Desmodur ECO N 7300 ist ein PDI-Trimerisat (NCO-Funktionalität >3) mit einem NCO-Gehalt von 21,5 Gew.-% von der Fa. Covestro AG. Die Viskosität beträgt ca. 9500 mPas bei 23 °C (DIN EN ISO 3219/A.3).
Polyethylenglycol 400 wurde mit einer Reinheit von > 99 Gew.-% von der Fa. ACROS bezogen.
Kaliumacetat wurde mit einer Reinheit von > 99 Gew.-% von der Fa. ACROS bezogen.
Die Kurzglasfaser mit der Bezeichnung 910A-10P wurde von der Fa. Owens Corning geliefert und lag in ca. 4,5 mm langen Bündeln vor. Der Durchmesser der einzelnen Fasern betrug 0,01 mm.

Alle Rohstoffe mit Ausnahme des Katalysators und der Glasfasern wurden vor Verwendung im Vakuum entgast, die Polyole zusätzlich getrocknet.

### Herstellung des Katalysators

Kaliumacetat (5,0 g) wurde in dem PEG 400 (95,0 g) bei RT solange gerührt, bis alles gelöst war. Es wurde so eine 5 Gew.-% Lösung von Kaliumacetat in PEG 400 erhalten und ohne weitere Behandlung als Katalysator eingesetzt.

### Herstellung der Polyisocyanuratkomposite

Wenn nicht anders angegeben wurde zur Herstellung der Polyisocyanuratkomposite zunächst die Isocyanatzusammensetzung durch Vermischen der entsprechenden Isocyanatkomponenten bei 25 °C in einem Speedmixer DAC 150.1 FVZ der Fa. Hauschild für 60 - 300 Sekunden bei 2750 min⁻¹ hergestellt. Diese wurde dann mit dem Katalysator bei RT vermischt (Speedmixer). Anschließend wurde zunächst ein Zehntel der Glasfasermenge zugefügt. Die gesamte Masse wurde in einem Speedmixer DAC 150.1 FVZ der Fa. Hauschild für 60 - 300 Sekunden bei 2750 min⁻¹ vermischt, wobei die Kurzglasfaserbündel exfolieren und alles eine breiige Masse bildet. Nun wird die restliche Glasfasermenge zugegeben und die Masse wieder für ca. 60 Sekunden bei 2750 min⁻¹ im Speedmixer gemischt.

Anschließend wurde die Mischung in eine Form (Metalldeckel, ca. 6cm im Durchmesser und ca. 1 cm hoch) verbracht und im Ofen ausgehärtet. Dabei wurde folgendes Heizprogramm verwendet: bei Gegenwart von Desmodur I oder W 30 min bei 180 °C, alle anderen 30 min bei 160 °C. Die Reaktionsenthalpie der Bildung von Isocyanurat betrug bei primären aliphatisch Isocyanaten pro Isocyanatgruppe 75 kJ/mol.

### Erfindungsgemäße Beispiele für die Herstellung der Polyisocyanurat-Kompositwerkstoffe

### Ausführungsbeispiel 1

Wie oben beschrieben wurde eine Mischung aus Desmodur N 3600 (36,0 g) und Desmodur H (4,0 g) mit Katalysator (0,80 g) vermischt, die Kurzglasfaser (20,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 6,77. Die Topfzeit betrug mehr als 5 Stunden. Im Bewitterungstest wurden nach 1000 Stunden bei der visuellen Abmusterung keine Veränderungen an der Oberfläche oder Farbe bemerkt. Solche Veränderungen wurden auch nach 9000 Stunden nicht beobachtet. Der Tg betrug 117 °C.

### Ausführungsbeispiel 2

Wie oben beschrieben wurde eine Mischung aus Desmodur N 3600 (36,0 g) und Desmodur H (4,0 g) mit Katalysator (0,80 g) vermischt, die Kurzglasfaser (30,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 6,39.

### Ausführungsbeispiel 3

Wie oben beschrieben wurde eine Mischung aus Desmodur N 3600 (20,0 g) und Desmodur H (20,0 g) mit Katalysator (0,80 g) vermischt, die Kurzglasfaser (20,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 6,60. Die Topfzeit betrug mehr als 30 Minuten.

### Ausführungsbeispiel 4

Wie oben beschrieben wurde eine Mischung aus Desmodur N 3600 (20,0 g) und Desmodur H (20,0 g) mit Katalysator (0,80 g) vermischt, die Kurzglasfaser (40,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 6,69.

### Ausführungsbeispiel 5

Wie oben beschrieben wurde eine Mischung aus Desmodur N 3600 (30,0 g) und Desmodur I (10,0 g) mit Katalysator (0,80 g) vermischt, die Kurzglasfaser (20,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 8,21.

### Ausführungsbeispiel 6

Wie oben beschrieben wurde eine Mischung aus Desmodur N 3600 (30,0 g) und Desmodur I (10,0 g) mit Katalysator (0,80 g) vermischt, die Kurzglasfaser (30,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 6,90.

### Ausführungsbeispiel 7

Wie oben beschrieben wurde eine Mischung aus Desmodur N 3600 (20,0 g) und Desmodur I (20,0 g) mit Katalysator (0,80 g) vermischt, die Kurzglasfaser (20,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 6,60. Die Topfzeit betrug mehr als 120 Minuten. Im Bewitterungstest wurden nach 1000 Stunden bei der visuellen Abmusterung keine Veränderungen an der Oberfläche oder Farbe bemerkt. Solche Veränderungen wurden auch nach 9000 Stunden nicht beobachtet.

### Ausführungsbeispiel 8

Wie oben beschrieben wurde eine Mischung aus Desmodur N 3600 (20,0 g) und Desmodur I (20,0 g) mit Katalysator (0,80 g) vermischt, die Kurzglasfaser (40,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 5,64.

### Ausführungsbeispiel 9

Wie oben beschrieben wurde eine Mischung aus Desmodur N 3600 (30,0 g) und Desmodur W (10,0 g) mit Katalysator (0,80 g) vermischt, die Kurzglasfaser (30,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 7,53.

### Ausführungsbeispiel 10

Wie oben beschrieben wurde eine Mischung aus Desmodur N 3600 (20,0 g) und Desmodur W (20,0 g) mit Katalysator (0,80 g) vermischt, die Kurzglasfaser (20,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 5,15. Die Topfzeit betrug mehr als 60 Minuten. Im Bewitterungstest wurden nach 1000 Stunden bei der visuellen Abmusterung keine Veränderungen an der Oberfläche oder Farbe bemerkt. Solche Veränderungen wurden auch nach 9000 Stunden nicht beobachtet.

### Ausführungsbeispiel 11

Wie oben beschrieben wurde eine Mischung aus Desmodur N 3600 (20,0 g) und Desmodur W (20,0 g) mit Katalysator (0,80 g) vermischt, die Kurzglasfaser (40,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 4,64.

### Ausführungsbeispiel 12

Wie oben beschrieben wurde eine Mischung aus Desmodur H (20,0 g) und Desmodur I (20,0 g) mit Katalysator (0,80 g) vermischt, die Kurzglasfaser (40,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 7,68.

### Ausführungsbeispiel 13

Wie oben beschrieben wurde eine Mischung aus Desmodur H (5,0 g) und Desmodur ECO N 7300 (456,0 g) mit Katalysator (1,00 g) vermischt, die Kurzglasfaser (25,0 g) eingearbeitet und die Masse in die Form gedrückt. Nach Aushärtung wurde der Block aus der Form gelöst und die glatte Rückseite mit dem Farbmessgerät vermessen. Der gemessene b*-Wert betrug 7,4. Die Topfzeit betrug mehr als 180 Minuten.

### Nichterfindungsgemäße Beispiele für die Herstellung der Polyisocyanurat-Kompositwerkstoffe

### Vergleichsbeispiel 1

Wie oben beschrieben wurde eine Mischung aus Desmodur N 3600 (36,0 g) und Desmodur H (4,0 g) mit Katalysator (0,012 g) vermischt, die Kurzglasfaser (20,0 g) eingearbeitet und die Masse in die Form gedrückt. Die Masse wurde bei 160 °C für 30 min in den Ofen gestellt. Nach dieser Zeit war die Masse noch immer klebrig und nicht hart, d.h. die Vernetzungsreaktion unvollständig. Der Stoff wurde nicht weiter analysiert.

Das Vergleichsbeispiel 1 zeigt, dass die Katalysatorkonzentration unterhalb bzw. gleich einer Menge von 0,03 Gew.-% nicht ausreicht, um in kurzer Zeit einen vollständig vernetzten Polyisocyanuratkunststoff zu erhalten.

### Nichterfindungsgemäße Beispiele für Polyisocyanuratwerkstoffe ohne faserförmigen Füllstoff

Wenn nicht anders angegeben wurde zur Herstellung der faserfreien Polyisocyanuratwerkstoffe zunächst die Polyisocyanatzusammensetzung durch Vermischen der entsprechenden Isocyanatkomponenten bei 25 °C in einem Speedmixer DAC 150.1 FVZ der Fa. Hauschild für 60 - 300 Sekunden bei 2750 min⁻¹ hergestellt. Diese wurde mit dem Katalysator bei RT vermischt (Speedmixer). Anschließend wurde die Mischung in eine Form (Metalldeckel, ca. 6 cm im Durchmesser und ca. 1 cm hoch) verbracht und im Ofen ausgehärtet. Dabei wurde folgendes Heizprogramm verwendet: bei Gegenwart von Desmodur I oder W 30 min bei 180 °C, alle anderen 30 min bei 160 °C.

### Vergleichsbeispiel 2

Wie oben beschrieben wurde eine Mischung aus Desmodur N 3600 (36,0 g) und Desmodur H (4,0 g) mit Katalysator (0,80 g) vermischt und die Masse in die Form gegossen. Nach Aushärtung wurde der Block aus der Form gelöst und die glatte Rückseite mit dem Farbmessgerät vermessen. Der gemessene b*-Wert betrug 9,16. Der Tg betrug 118 °C.

### Vergleichsbeispiel 3

Wie oben beschrieben wurde eine Mischung aus Desmodur N 3600 (20,0 g) und Desmodur H (20,0 g) mit Katalysator (0,80 g) vermischt und die Masse in die Form gegossen. Nach Aushärtung wurde der Block aus der Form gelöst und die glatte Rückseite mit dem Farbmessgerät vermessen. Der gemessene b*-Wert betrug 11,66.

### Vergleichsbeispiel 4

Wie oben beschrieben wurde eine Mischung aus Desmodur N 3600 (30,0 g) und Desmodur I (10,0 g) mit Katalysator (0,80 g) vermischt und die Masse in die Form gegossen. Nach Aushärtung wurde der Block aus der Form gelöst und die glatte Rückseite mit dem Farbmessgerät vermessen. Der gemessene b*-Wert betrug 19,77.

### Vergleichsbeispiel 5

Wie oben beschrieben wurde eine Mischung aus Desmodur N 3600 (20,0 g) und Desmodur I (20,0 g) mit Katalysator (0,80 g) vermischt und die Masse in die Form gegossen. Nach Aushärtung wurde der Block aus der Form gelöst und die glatte Rückseite mit dem Farbmessgerät vermessen. Der gemessene b*-Wert betrug 22,27.

### Vergleichsbeispiel 6

Wie oben beschrieben wurde eine Mischung aus Desmodur N 3600 (30,0 g) und Desmodur W (10,0 g) mit Katalysator (0,80 g) vermischt und die Masse in die Form gegossen. Nach Aushärtung wurde der Block aus der Form gelöst und die glatte Rückseite mit dem Farbmessgerät vermessen. Der gemessene b*-Wert betrug 13,24.

### Vergleichsbeispiel 7

Wie oben beschrieben wurde eine Mischung aus Desmodur N 3600 (20,0 g) und Desmodur W (20,0 g) mit Katalysator (0,80 g) vermischt und die Masse in die Form gegossen. Nach Aushärtung wurde der Block aus der Form gelöst und die glatte Rückseite mit dem Farbmessgerät vermessen. Der gemessene b*-Wert betrug 13,85.

### Vergleichsbeispiel 8

Wie oben beschrieben wurde eine Mischung aus Desmodur H (20,0 g) und Desmodur I (20,0 g) mit Katalysator (0,80 g) vermischt und die Masse in die Form gegossen. Nach Aushärtung wurde der Block aus der Form gelöst und die glatte Rückseite mit dem Farbmessgerät vermessen. Der gemessene b*-Wert betrug 17,84.

### Vergleichsbeispiel 9

Wie oben beschrieben wurde Desmodur H (20,0 g) mit Katalysator (0,80 g) vermischt und die Masse in die Form gegossen. Beim Erwärmen verlief die Reaktion heftig und stark exotherm unter Bildung von Rauch. Als Produkt wurde ein blasiger, brauner bis dunkelbrauner poröser Stoff erhalten, der nicht weiter analysiert wurde.

### Vergleichsbeispiel 10

Es wurde wie oben beschrieben zunächst Desmodur N 3300 (30,0 g) mit Katalysator (1,0 g) vermischt, anschließend Desmodur T 100 (20,0 g) vermischt und die Masse in die Form gegossen. Die Reaktion setzte ohne äußere Erwärmung deutlich unter 30 min heftig und stark exotherm ein. Das Produkt wurde nicht weiter analysiert.

### Vergleichsbeispiel 11

Es wurde wie oben beschrieben zunächst Desmodur N 3600 (30,0 g) mit Desmodur VL 50 (20,0 g) vermischt, anschließend mit Katalysator (1,5 g) vermischt und die Masse in die Form gegossen. Die Reaktion setzte ohne äußere Erwärmung deutlich unter 30 min heftig und stark exotherm ein. Das Produkt wurde nicht weiter analysiert.

Die Versuche zeigen, dass die erfindungsgemäßen Polyisocyanurat-Kompositwerkstoffe der Ausführungsbeispiele 1 bis 12 gegenüber den faserfreien Polyisocyanuratwerkstoffen eine deutlich geringere Verfärbung (einen geringeren Gelbwert bzw. b*-Wert) aufweisen. Dies bedeutet, dass das ausreagierte Polyisocyanuratmatrixmaterial der erfindungsgemäßen Polyisoycyanurat-Kompositwerkstoffe unter den drastischen Reaktionsbedingungen im Vergleich zu dem faserfreien Polyisocyanuratwerkstoff deutlich weniger geschädigt bzw. nicht geschädigt wurde. Zudem zeigten die reaktiven Harzmischungen mit den hier verwendeten Katalysatorkonzentrationen Topfzeiten von mehr als 30 min bei gleichzeitig schnellen Vernetzungszeiten, was einem quasi Einkomponenten-System sehr nahe kommt und eine sehr leichte praktische Handhabung ermöglicht. Auf aufwendige und teure Dosierapparate wie bei Zweikomponenten- Systemen notwendig, kann daher verzichtet werden. Dies sollte den Weg für die effiziente Nutzung von reinen, Faser-verstärkten Polyisocyanurat-Kompositwerkstoffen in der Industrie ebnen.

Vergleichsbeispiele 10 und 11 zeigen, dass ein hoher Anteil aromatischer Polyisocyanate nachteilig ist, da die vorteilhaften langen Topfzeiten unter diesen Bedingungen nicht erreicht werden können und die Harzmischung zu schnell polymerisiert.

## Patentansprüche

1. Verfahren zur Herstellung eines Polyisocyanurat-Kompositwerkstoffs, umfassend die folgenden Schritte:
a) Bereitstellen einer Polyisocyanatzusammensetzung A), welche monomere Polyisocyanate in einer Menge von mindestens 2 Gew.-% und wenigstens 60 Gew.-% aliphatischer Polyisocyanate enthält, und
b) katalytische Trimerisierung der Polyisocyanatzusammensetzung A) in Gegenwart mindestens eines faserförmigen Füllstoffs B) und eines Trimerisierungskatalysators C) zum Polyisocyanurat-Kompositwerkstoff, wobei der Trimerisierungskatalysator C) mindestens ein quaternäres Ammonium- und/oder ein Metallsalz umfasst, wobei der Anteil des faserförmigen Füllstoffs bezogen auf das Gesamtgewicht des Polyisocyanurat-Kompositwerkstoffs mehr als 30 Gew.-% beträgt.

2. Verfahren gemäß Anspruch 1, **dadurch gekennzeichnet, dass** der Trimerisierungskatalysator C) als Metallsalz in Schritt b) ein Alkali- oder Erdalkalimetallsalz einer Carbonsäure umfasst.

3. Verfahren gemäß Anspruch 1 oder 2, **dadurch gekennzeichnet, dass** der Trimerisierungskatalysator C) als Metallsalz in Schritt b) Kaliumacetat umfasst.

4. Verfahren gemäß einem der Ansprüche 1 bis 3, **dadurch gekennzeichnet, dass** der Trimerisierungskatalysator C) als Polyether ein Polyethylenglykol umfasst.

5. Verfahren gemäß einem der Ansprüche 1 bis 4, **dadurch gekennzeichnet, dass** der faserförmige Füllstoff ausgewählt ist aus der Gruppe bestehend aus Glasfasern, Basaltfasern, Carbon(Kohlenstoff)fasern und deren Mischungen.

6. Verfahren gemäß einem der Ansprüche 1 bis 5, **dadurch gekennzeichnet, dass** als faserförmiger Füllstoff Glasfasern eingesetzt werden.

7. Verfahren gemäß einem der Ansprüche 1 bis 6, **dadurch gekennzeichnet, dass** die Polyisocyanatzusammensetzung A) zu mindestens 80 Gew.-% bezogen auf das Gewicht der Polyisocyanatzusammensetzung A), aus Polyisocyanaten besteht, die ausschließlich aliphatisch und/oder cyclo-aliphatisch gebundene Isocyanat-Gruppen aufweisen.

8. Verfahren gemäß einem der Ansprüche 1 bis 7, **dadurch gekennzeichnet, dass** die oligomeren Polyisocyanate aus ein oder mehreren oligomeren Polyisocyanaten bestehen, die zu einem Anteil > 80 Gewichtsprozent aus 1,4-Diisocyanatobutan, 1,5-Diisocyanatopentan, 1,6-Diisocyanatohexan, Isophorondiisocyanat oder 4,4'-Diisocyanatodicyclohexylmethan oder deren Mischungen aufgebaut sind.

9. Verfahren gemäß einem der Ansprüche 1 bis 8, **dadurch gekennzeichnet, dass** die Polyisocyanatzusammensetzung A) eine mittlere NCO-Funktionalität von 1,0 bis 6,0 aufweist.

10. Verfahren gemäß einem der Ansprüche 1 bis 10, **dadurch gekennzeichnet, dass** die katalytische Trimerisierung bei einer Temperatur von größer 150°C innerhalb von weniger als 10 Minuten mindestens bis zu einem Umsetzungsgrad durchgeführt wird, bei dem nur noch höchstens 20 % der ursprünglich in der Polyisocyanatzusammensetzung A) enthaltenen Isocyanatgruppen vorhanden sind.

11. Verfahren gemäß Anspruch 10, **dadurch gekennzeichnet, dass** der Umsetzungsgrad ein Umsetzungsgrad ist, bei dem nur noch höchstens 10 % der ursprünglich in der Polyisocyanatzusammensetzung A) enthaltenen Isocyanatgruppen vorhanden sind.

12. Polyisocyanurat-Kompositwerkstoff, erhältlich nach einem Verfahren gemäß einem der Ansprüche 1 bis 11.

13. Polyisocyanurat-Kompositwerkstoff gemäß Anspruch 12, **dadurch gekennzeichnet, dass** die Menge an Stickstoff im fertigen Polyisocyanurat-Kompositwerkstoff mindestens 9 Gew.-% bezogen auf das Gesamtgewicht der Polyisocyanuratkunststoff-Matrix im Polyisocyanurat-Kompositwerkstoff beträgt.

14. Polyisocyanurat-Kompositwerkstoff gemäß Anspruch 12 oder 13, **dadurch gekennzeichnet, dass** der Gewichtsanteil des der Metallionen im Polyisocyanurat-Kompositwerkstoff mindestens 0,00025 Gew.-% bezogen auf die Polyisocyanatzusammensetzung A) beträgt.

15. Polyisocyanurat-Kompositwerkstoff gemäß einem der Ansprüche 12 bis 14, **dadurch gekennzeichnet, dass** der Polyisocyanurat-Kompositwerkstoff eine Dichte von größer 1,30 g/cm³ bestimmt nach DIN EN ISO 1183-1 aufweist.

16. Verwendung des Polyisocyanurat-Kompositwerkstoffs gemäß einem der Ansprüche 12 bis 15 zur Herstellung von Bauteilen.

17. Bauteile, bestehend aus oder enthaltend einen Polyisocyanurat-Kompositwerkstoff gemäß einem der Ansprüche 12 bis 16.

## Claims

1. Process for producing a composite polyisocyanurate material, comprising the following steps:
a) providing a polyisocyanate composition A) comprising monomeric polyisocyanates in an amount of at least 2% by weight and at least 60% by weight of aliphatic polyisocyanates, and
b) catalytically trimerizing the polyisocyanate composition A) in the presence of at least one fibrous filler B) and of a trimerization catalyst C) to give the composite polyisocyanurate material, where the trimerization catalyst C) comprises at least one quaternary ammonium salt and/or a metal salt, where the proportion of the fibrous filler based on the total weight of the composite polyisocyanurate material is more than 30% by weight.

2. Process according to Claim 1, **characterized in that** the trimerization catalyst C) comprises an alkali metal salt or alkaline earth metal salt of a carboxylic acid as metal salt in step b).

3. Process according to Claim 1 or 2, **characterized in that** the trimerization catalyst C) comprises potassium acetate as metal salt in step b).

4. Process according to any of Claims 1 to 3, **characterized in that** the trimerization catalyst C) comprises a polyethylene glycol as polyether.

5. Process according to any of Claims 1 to 4, **characterized in that** the fibrous filler is selected from the group consisting of glass fibres, basalt fibres, carbon fibres and mixtures thereof.

6. Process according to any of Claims 1 to 5, **characterized in that** the fibrous filler used is glass fibres.

7. Process according to any of Claims 1 to 6, **characterized in that** the polyisocyanate composition A) consists to an extent of at least 80% by weight, based in each case on the weight of the polyisocyanate composition A), of polyisocyanates having exclusively aliphatically and/or cycloaliphatically bonded isocyanate groups.

8. Process according to any of Claims 1 to 7, **characterized in that** the oligomeric polyisocyanates consist of one or more oligomeric polyisocyanates formed in a proportion of > 80 percent by weight from 1,4-diisocyanatobutane, 1,5-diisocyanatopentane, 1,6-diisocyanatohexane, isophorone diisocyanate or 4,4'-diisocyanatodicyclohexylmethane or mixtures thereof.

9. Process according to any of Claims 1 to 8, **characterized in that** the polyisocyanate composition A) has an average NCO functionality of 1.0 to 6.0.

10. Process according to any of Claims 1 to 10, **characterized in that** the catalytic trimerization is conducted at a temperature of greater than 150°C within less than 10 minutes, at least up to a conversion level at which only at most 20% of the isocyanate groups originally present in the polyisocyanate composition A) are still present.

11. Process according to Claim 10, **characterized in that** the conversion level is a conversion level at which only at most 10% of the isocyanate groups originally present in the polyisocyanate composition A) are still present.

12. Composite polyisocyanurate material obtainable by a process according to any of Claims 1 to 11.

13. Composite polyisocyanurate material according to Claim 12, **characterized in that** the amount of nitrogen in the finished composite polyisocyanurate material is at least 9% by weight, based on the total weight of the polyisocyanurate plastic matrix in the composite polyisocyanurate material.

14. Composite polyisocyanurate material according to Claim 12 or 13, **characterized in that** the proportion by weight of the of the metal ions in the composite polyisocyanurate material is at least 0.00025% by weight, based on the polyisocyanate composition A).

15. Composite polyisocyanurate material according to any of Claims 12 to 14, **characterized in that** the composite polyisocyanurate material has a density of greater than 1.30 g/cm³ determined according to DIN EN ISO 1183-1.

16. Use of the composite polyisocyanurate material according to any of Claims 12 to 15 for production of components.

17. Components consisting of or comprising a composite polyisocyanurate material according to any of Claims 12 to 16.

## Revendications

1. Procédé pour la fabrication d'un matériau composite à base de polyisocyanurate, comprenant les étapes suivantes :
a) mise à disposition d'une composition de polyisocyanate A), qui contient des polyisocyanates monomères en une quantité d'au moins 2% en poids et au moins 60% en poids de polyisocyanates aliphatiques et
b) trimérisation catalytique de la composition de polyisocyanate A) en présence d'au moins une charge sous forme de fibres B) et d'un catalyseur de trimérisation C) en matériau composite à base de polyisocyanurate, le catalyseur de trimérisation C) comprenant au moins un sel d'ammonium quaternaire et/ou de métal, la proportion de la charge sous forme de fibres par rapport au poids total du matériau composite à base de polyisocyanurate étant supérieure à 30% en poids.

2. Procédé selon la revendication 1, **caractérisé en ce que** le catalyseur de trimérisation C) comprend, en tant que sel de métal dans l'étape b), un sel de métal alcalin ou alcalino-terreux d'un acide carboxylique.

3. Procédé selon la revendication 1 ou 2, **caractérisé en ce que** le catalyseur de trimérisation C) comprend, en tant que sel de métal dans l'étape b), de l'acétate de potassium.

4. Procédé selon l'une quelconque des revendications 1 à 3, **caractérisé en ce que** le catalyseur de trimérisation C) comprend, en tant que polyéther, un polyéthylèneglycol.

5. Procédé selon l'une quelconque des revendications 1 à 4, **caractérisé en ce que** la charge sous forme de fibres est choisie dans le groupe constitué par les fibres de verre, les fibres de basalte, les fibres de carbone et leurs mélanges.

6. Procédé selon l'une quelconque des revendications 1 à 5, **caractérisé en ce qu'**on utilise, en tant que charge sous forme de fibres, des fibres de verre.

7. Procédé selon l'une quelconque des revendications 1 à 6, **caractérisé en ce que** la composition de polyisocyanate A) est constituée, à raison d'au moins 80% en poids par rapport au poids de la composition de polyisocyanate A), de polyisocyanates qui présentent exclusivement des groupes isocyanate liés de manière aliphatique et/ou cycloaliphatique.

8. Procédé selon l'une quelconque des revendications 1 à 7, **caractérisé en ce que** les polyisocyanates oligomères sont constitués par un ou plusieurs polyisocyanates oligomères qui sont constitués, à raison d'une proportion > 80% en poids, de 1,4-diisocyanatobutane, de 1,5-diisocyanatopentane, de 1,6-diisocyanatohexane, de diisocyanate d'isophorone ou de 4,4'-diisocyanatodicyclohexylméthane ou de leurs mélanges.

9. Procédé selon l'une quelconque des revendications 1 à 8, **caractérisé en ce que** la composition de polyisocyanate A) présente une fonctionnalité NCO moyenne de 1,0 à 6,0.

10. Procédé selon l'une quelconque des revendications 1 à 10, **caractérisé en ce que** la trimérisation catalytique est réalisée à une température supérieure à 150°C en moins de 10 minutes au moins jusqu'à un degré de transformation auquel il ne reste au maximum plus que 20% des groupes isocyanate contenus initialement dans la composition de polyisocyanate A).

11. Procédé selon la revendication 10, **caractérisé en ce que** le degré de transformation est un degré de transformation auquel il ne reste au maximum plus que 10% des groupes isocyanate contenus initialement dans la composition de polyisocyanate A).

12. Matériau composite à base de polyisocyanurate pouvant être obtenu selon un procédé selon l'une quelconque des revendications 1 à 11.

13. Matériau composite à base de polyisocyanurate selon la revendication 12, **caractérisé en ce que** la quantité d'azote dans le matériau composite à base de polyisocyanurate fini représente au moins 9% en poids par rapport au poids total de la matrice de matériau synthétique à base de polyisocyanurate dans le matériau composite à base de polyisocyanurate.

14. Matériau composite à base de polyisocyanurate selon la revendication 12 ou 13, **caractérisé en ce que** la proportion en poids du des ions métalliques dans le matériau composite à base de polyisocyanurate représente au moins 0,00025% en poids par rapport à la composition de polyisocyanate A).

15. Matériau composite à base de polyisocyanurate selon l'une quelconque des revendications 12 à 14, **caractérisé en ce que** le matériau composite à base de polyisocyanurate présente une densité supérieure à 1,30 g/cm³, déterminée selon la norme DIN EN ISO 1183-1.

16. Utilisation du matériau composite à base de polyisocyanurate selon l'une quelconque des revendications 12 à 15 pour la fabrication de pièces.

17. Pièces, constituées par ou contenant un matériau composite à base de polyisocyanurate selon l'une quelconque des revendications 12 à 16.
